# FASCICULE DE BREVET EUROPEEN

(11) **EP 4 125 247 B1**
(45) Date de publication et mention de la délivrance du brevet: **08.11.2023**
(21) Numéro de dépôt: 22185131.4
(22) Date de dépôt: 15.07.2022
(51) Int. Cl.: H04L 27/227, H04L 27/00

(54) **DISPOSITIF POUR LA COMPENSATION D'UN DÉCALAGE FRÉQUENTIEL**
VORRICHTUNG ZUR KOMPENSATION EINER FREQUENZABWEICHUNG
DEVICE FOR COMPENSATING A FREQUENCY SHIFT

(30) Priorité: 30.07.2021 FR 2108297
(43) Date de publication de la demande: 01.02.2023
(73) Titulaire: STMICROELECTRONICS SA, 92120 Montrouge (FR)
(72) Inventeur: ANDRE, Eric, 38570 Hurtieres (FR); VOGT, Lionel, 73110 La Rochette (FR)
(74) Mandataire: Cabinet Beaumont

(56) Documents cités:
- US-A1- 2003 007 575
- US-A1- 2004 161 055
- US-B1- 6 904 098
- US-B2- 7 751 503

## Description

### Domaine technique

La présente description concerne de façon générale les circuits électroniques, et plus particulièrement les circuits électroniques pour la compensation d'un décalage fréquentiel.

### Technique antérieure

On connaît des circuits de réception d'un signal modulé en QPSK (de l'anglais "Quad Phase Shift Keying" - modulation par changement de phase à quatre valeurs de phase) . Ces circuits sont configurés pour recevoir un signal RFin a une fréquence porteuse Fc dont la phase est modulée par un signal I(t) (de l'anglais "In Phase" - en phase) et un signal Q(t) (de l'anglais "In Quadrature" - en quadrature), les signaux I(t) et Q(t) étant des signaux binaires et le couple de valeurs des signaux I(t) et Q(t) définissant un symbole mis à jour de manière périodique à une fréquence Fs, dite fréquence de données.

Pour démoduler le signal reçu RFin, ces circuits de réception comprennent un oscillateur local fournissant une fréquence FLO. Pour que la démodulation s'effectue correctement, c'est-à-dire sans erreur, il est souhaitable que la fréquence FLO soit égale à la fréquence Fc. En effet, lorsque la fréquence FLO est différente de la fréquence Fc, cela peut conduire à des erreurs de démodulation. A titre d'exemple, plus la fréquence Fc a une valeur élevée, par exemple supérieure à 10 GHz comme c'est notamment le cas dans la bande de transmission V ("V-band" en anglais), plus un écart donné entre la fréquence Fc et la fréquence FLO est susceptible de conduire à des erreurs de démodulation.

Pour que la fréquence FLO soit égale à la fréquence Fc, il est connu de générer, dans le circuit de réception, la fréquence FLO à partir d'un quartz. Toutefois, l'utilisation d'un quartz augmente le coût du circuit de réception ce qui n'est pas souhaitable. En outre, un quartz n'a pas une précision infinie, et le recours à un quartz pour générer la fréquence FLO ne garantit que la fréquence FLO soit exactement égale à la fréquence Fc.

Pour éviter l'utilisation d'un quartz, un circuit de compensation du décalage fréquentiel entre la fréquence Fc et la fréquence FLO peut être prévu dans le circuit de réception. Les circuits de compensation de décalage fréquentiel connus souffrent toutefois de divers inconvénients. Par exemple, ces circuits sont complexes à mettre en oeuvre, ne sont pas adaptés à fonctionner aux fréquences élevées indiquées ci-dessus à titre d'exemple, et/ou ont une consommation électrique élevée. Le document de brevet US 2003/0007575 A1 par S. Ohishi montre un circuit avec un comparateur de phase, des moyens de correction de bruit de phase, un oscillateur controllé numériquement et un générateur de sin theta et cos theta.

### Résumé de l'invention

Il existe un besoin d'un circuit, ou dispositif, de compensation de décalage fréquentiel qui pallie tout ou partie des inconvénients des circuits de compensation de décalage fréquentiel connus, par exemple pour une mise en oeuvre dans un circuit de démodulation QPSK.

Un mode de réalisation pallie tout ou partie des inconvénients des dispositifs de correction ou de compensation de décalage fréquentiel connus, par exemple pour une mise en oeuvre dans un circuit de démodulation QPSK.

Par exemple, un mode de réalisation prévoit un dispositif de compensation de décalage fréquentiel permettant, lors de sa mise en oeuvre dans un circuit de démodulation QPSK, de démoduler les données malgré un décalage maximal entre la fréquence Fc et la fréquence FLO supérieur à 1000ppm (partie par million). A titre d'exemple, le dispositif permet un fonctionnement avec un débit de données allant jusqu'à 10 Gbps, et une consommation inférieure à 10pJ par bit. A titre d'exemple, pour une fréquence Fc égale à 60 GHz, un décalage fréquentiel de 1000 ppm correspond à un décalage entre la fréquence Fc et la fréquence FLO égal à 60 MHz.

Un mode de réalisation prévoit un dispositif comprenant un premier circuit, un deuxième circuit et un troisième circuit. Le premier circuit est configuré pour recevoir un premier signal, un deuxième signal et un troisième signal, le troisième signal étant représentatif d'un déphasage, générer un quatrième signal et un cinquième signal par application dudit déphasage respectivement au premier signal et au deuxième signal, et fournir un sixième signal correspondant à un échantillonnage sur un bit du quatrième signal, un septième signal correspondant à un échantillonnage sur un bit du cinquième signal, un huitième signal correspondant à un échantillonnage sur un bit de la différence entre les quatrième et cinquième signaux, et un neuvième signal correspondant à un échantillonnage sur un bit de la somme entre les quatrième et cinquième signaux. Le deuxième circuit est configuré pour recevoir les sixième, septième, huitième et neuvième signaux, déterminer, lors d'une première phase où les premier et deuxième signaux sont représentatifs d'un premier symbole connu d'une constellation QPSK, un état d'un premier bit parmi un premier état et un deuxième état à partir des huitième et neuvième signaux, fournir un signal numérique correspondant à une multiplication du premier bit par un gain ; et diminuer périodiquement, pendant ladite première phase, ledit gain jusqu'à une valeur unitaire. Le troisième circuit est configuré pour déterminer le troisième signal à partir dudit signal numérique.

Selon un mode de réalisation, le deuxième circuit comprend un quatrième circuit configuré pour, lors de la première phase, mettre le premier bit au premier état lorsque, sur la constellation QPSK, une position correspondant aux quatrième et cinquième signaux est décalée dans un premier sens par rapport au premier symbole, et mettre le premier bit au deuxième état lorsque, sur la constellation QPSK, la position est décalée dans un deuxième sens par rapport au premier symbole.

Selon un mode de réalisation, le quatrième circuit est configuré pour déterminer le sens du décalage à partir des huitième et neuvième signaux, de préférence uniquement à partir des huitième et neuvième signaux.

Selon un mode de réalisation, le quatrième circuit est une machine d'états à deux états, configurée pour être cadencée à la fréquence d'échantillonnage de la somme et de la différence des quatrième et cinquième signaux.

Selon un mode de réalisation, le troisième circuit comprend un premier filtre numérique, de préférence proportionnel intégrateur, suivi d'un deuxième filtre numérique, de préférence intégrateur, le premier filtre étant configuré pour recevoir ledit signal numérique, le deuxième filtre étant configuré pour recevoir un signal de sortie du premier filtre et pour fournir le troisième signal.

Selon un mode de réalisation, les premier et deuxième filtres sont configurés pour être cadencés à la fréquence d'échantillonnage de la somme et de la différence des quatrième et cinquième signaux.

Selon un mode de réalisation, le dispositif comprend en outre un oscillateur configuré pour fournir un dixième signal et un onzième signal à une première fréquence déterminée par un signal de commande, le onzième signal étant déphasé de 90° par rapport au dixième signal, et un circuit de commande configuré pour fournir ledit signal de commande.

Selon un mode de réalisation, lors de la première phase de fonctionnement, le circuit de commande est configuré, au moins lorsque le gain atteint une première fois la valeur unitaire, pour déterminer un écart entre la première fréquence et une deuxième fréquence, de préférence à partir d'un signal fourni par le troisième circuit, comparer l'écart déterminé à un seuil, mettre à jour le signal de commande et commander une réinitialisation du gain à une valeur maximale lorsque ladite comparaison indique que l'écart est supérieur audit seuil, et maintenir le signal de commande à sa valeur courante et commander le maintien du gain à la valeur unitaire lorsque ladite comparaison indique que l'écart est inférieur audit seuil.

Selon un mode de réalisation, le dispositif comprend en outre un premier mélangeur de fréquence configuré pour recevoir le dixième signal et un signal radiofréquence modulé en QPSK et un deuxième mélangeur de fréquence configuré pour recevoir le onzième signal et le signal radiofréquence modulé en QPSK, le premier mélangeur étant configuré pour fournir le premier signal et le deuxième mélangeur étant configuré pour fournir le deuxième signal.

Selon un mode de réalisation, le premier circuit est configuré pour échantillonner les quatrième et cinquième signaux, la somme des quatrième et cinquième signaux et la différence des quatrième et cinquième signaux à une fréquence inférieure à une fréquence de données du signal radiofréquence modulé en QPSK.

Selon un mode de réalisation, lors d'une deuxième phase de fonctionnement, le deuxième circuit est configuré pour déterminer l'état du premier bit sur la base des sixième, septième, huitième et neuvième signaux.

Selon un mode de réalisation, le deuxième circuit comprend un circuit configuré pour déterminer un passage de la première phase de fonctionnement à la deuxième phase de fonctionnement.

Selon un mode de réalisation, le deuxième circuit comprend un cinquième circuit configuré pour, lors de la deuxième phase, estimer auquel des quatre symboles de la constellation correspondent les premier et deuxième signaux, à partir des sixième et septième signaux, mettre le premier bit au premier état lorsque, sur la constellation, une position correspondant aux quatrième et cinquième signaux est décalée dans un premier sens par rapport au symbole estimé, et mettre le premier bit au deuxième état lorsque, sur la constellation, ladite position est décalée dans un deuxième sens par rapport au symbole estimé.

Selon un mode de réalisation, le cinquième circuit est configuré pour déterminer le sens du décalage à partir des huitième et neuvième signaux.

Un mode de réalisation prévoit un démodulateur QPSK comprenant un dispositif tel que décrit ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière très schématique et sous la forme de blocs, un exemple d'un système de transmission sans fil du type auquel s'appliquent les modes de réalisation décrits ;
la figure 2 représente, de manière schématique et sous la forme de bloc, un mode de réalisation d'un dispositif pour la correction d'un décalage fréquentiel ;
la figure 3 représente un diagramme de constellation QPSK et illustre un mode de mise en oeuvre d'un algorithme ;
la figure 4 représente un exemple de mise en oeuvre d'un circuit pour l'exécution de l'algorithme décrit en relation avec la figure 3 ;
la figure 5 représente un exemple de mise en oeuvre d'un circuit du dispositif de la figure 2 ;
la figure 6 est un organigramme illustrant un mode de réalisation d'un procédé mis en oeuvre par le dispositif 2 ;
la figure 7 représente un diagramme de constellation QPSK et illustre un mode de mise en oeuvre d'un algorithme ;
la figure 8 représente un exemple de mise en oeuvre d'un circuit pour l'exécution de l'algorithme de la figure 7 ;
la figure 9 représente un mode de réalisation d'un circuit du dispositif de la figure 2 ; et
la figure 10 représente un autre mode de réalisation d'un circuit du dispositif de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, certains éléments classiques des démodulateurs QPSK n'ont pas été détaillés, comme par exemple les circuits mélangeurs de fréquence et les circuits de récupération de fréquence de données (CDR de l'anglais "clock data recovery" - récupération d'horloge de données), les modes de réalisation décrits étant compatibles avec ces éléments classiques.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

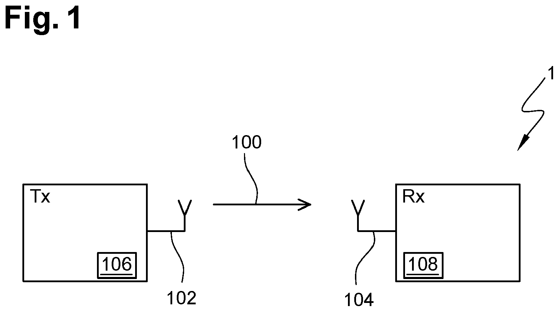

La figure 1 représente, de manière très schématique et sous la forme de blocs, un exemple d'un système 1 de transmission sans fil du type auquel s'appliquent les modes de réalisation décrits.

Le système 1 comprend un émetteur Tx d'un signal sans fil 100, et un récepteur Rx du signal 100. Plus particulièrement, l'émetteur Tx comprend une antenne 102 pour l'émission du signal 100, et le récepteur Rx comprend une antenne 104 pour la réception du signal 100.

L'émetteur comprend un oscillateur local 106 configuré pour fournir un signal à une fréquence Fc, dite fréquence porteuse.

Dans le système 1, la transmission de données entre l'émetteur Tx et le récepteur Rx s'effectue grâce à une modulation QPSK du signal 100.

Ainsi, bien que cela ne soit pas détaillé en figure 1, l'émetteur Tx reçoit des bits de données à transmettre sous la forme de deux signaux binaires I(t) et Q(t). L'état des signaux I(t) et Q(t) est mis à jour à une fréquence Fs, dite fréquence de données. Ainsi, à chaque période Ts correspondant à la fréquence Fs, les signaux I(t) et Q(t) forment un couple de bits ayant chacun un état binaire constant sur toute la période Ts, le couple de bits correspondant à l'un des quatre symboles d'une constellation QPSK, ou diagramme de constellation QPSK. Le signal I(t) est multiplié par un cosinus à la fréquence Fc, le signal Q(t) est multiplié par un sinus à la fréquence Fc, et les deux signaux ainsi obtenus sont additionnés l'un avec l'autre pour produire le signal 100. Le signal 100 est alors égal à I(t).cos(w.t) + Q(t).sin(w.t), avec w égal à 2.Π.Fc.

Du côté du récepteur Rx, le signal 100 est démodulé afin de récupérer les signaux I(t) et Q(t). Pour cela le récepteur comprend un oscillateur local 108 à la fréquence FLO. Le signal 100 est multiplié par un cosinus à la fréquence FLO sur une première voie, et par un sinus à la fréquence FLO sur une deuxième voie, puis, sur chaque voie, le signal obtenu après multiplication est filtré pour supprimer les fréquences non désirées. On obtient alors un premier signal I1(t) en sortie de la première voie, et un signal Q1(t) en sortie de la deuxième voie. Ces deux signaux I1(t) et Q1(t) sont échantillonnés à la fréquence de données Fs pour obtenir les bits transmis. En particulier, le récepteur Rx comprend un circuit (non représenté) de récupération de fréquence de données, ou CDR, permettant d'obtenir la fréquence de données Fs. Cependant, lorsque la fréquence FLO n'est pas égale à la fréquence Fc, ce qui est le cas en pratique, le signal I1(t) est proportionnel à I(t) .cos(phi.t) - Q(t) .sin(phi.t) et le signal Q1(t) est proportionnel à Q(t) .cos(phi.t) + I(t) .sin(phi.t), avec phi égal à 2.Π.deltaF, et deltaF égal à l'écart entre les fréquences FLO et Fc.

Cet écart deltaF, qui peut être supérieur à 1000ppm, pose problème pour la démodulation. En effet, l'écart deltaF entraîne une rotation des symboles de la constellation QPSK. Il est souhaitable de compenser cet écart deltaF.

Il est ici proposé d'utiliser un préambule au début d'une communication entre l'émetteur Tx et le récepteur Rx, correspondant à l'envoi, par l'émetteur Tx vers le récepteur Rx, d'un symbole QPSK S1 connu préalablement par le récepteur Rx. Pendant l'émission du préambule, du fait que le symbole S1 envoyé est connu et constant, selon un mode de réalisation, le récepteur Rx effectue au moins une phase de compensation grossière du décalage deltaF.

Selon un mode de réalisation, chaque phase de compensation grossière du décalage correspond à l'application d'un déphasage commandable aux signaux I1(t) et Q1(t), pour obtenir deux signaux I2(t) et Q2(t) dans lesquels l'influence de l'écart entre les fréquences Fc et FLO a été grossièrement compensé.

Selon un mode de réalisation, le déphasage variable est déterminé, ou commandé, sur la base d'un sens de décalage de la position, sur la constellation QPSK, d'un symbole correspondant aux signaux I2(t) et Q2(t) échantillonnés sur un bit, par exemple à une fréquence Fcwr inférieure à la fréquence de données Fs, par rapport au symbole connu envoyé pendant le préambule.

Selon un mode de réalisation, pendant chaque phase de compensation grossière, le sens du décalage est estimé à partir d'un échantillonnage sur un bit de la somme des signaux I2 (t) et Q2 (t) et d'un échantillonnage sur un bit de la différence des signaux I2 (t) et Q2(t), par exemple à la fréquence Fcwr.

Selon un mode de réalisation, lorsque l'écart de fréquence déterminé à la fin d'une première phase de compensation grossière est supérieur à un seuil TH, par exemple un seuil TH égal à une ou plusieurs dizaines de MHz, la fréquence FLO de l'oscillateur local est ajustée sur la base de cet écart de fréquence déterminé, et une nouvelle phase de compensation grossière est mise en oeuvre, de manière à tenir compte de la nouvelle valeur de la fréquence FLO, c'est-à-dire de manière à tenir compte de la valeur ajustée de la fréquence FLO.

Selon un mode de réalisation, une fois que l'émission du préambule est terminée, l'écart de fréquence est compensé de manière continue et de manière plus fine que pendant la ou les phases de compensation grossière.

La prévision du préambule décrit ci-dessus évite le recours, pendant chaque phase de compensation grossière du décalage, à une fréquence de données très précise du côté récepteur. En particulier, selon un mode de réalisation, pendant chaque phase de compensation grossière, l'échantillonnage est effectué à la fréquence Fcwr inférieure à la fréquence de données Fs, ce qui permet de réduire la consommation.

La prévision du préambule et d'au moins une mise en oeuvre de la phase de compensation grossière permet en outre de compenser des décalages importants entre les fréquences FLO et Fc qui ne peuvent pas être corrigés ou compensés par les dispositifs de correction de décalage fréquentiel usuels. Par exemple, une partie du décalage entre les fréquences Fc et FLO est corrigé au moins à la fin d'une première mise en oeuvre de la phase de compensation grossière du décalage, en ajustant la valeur de la fréquence FLO.

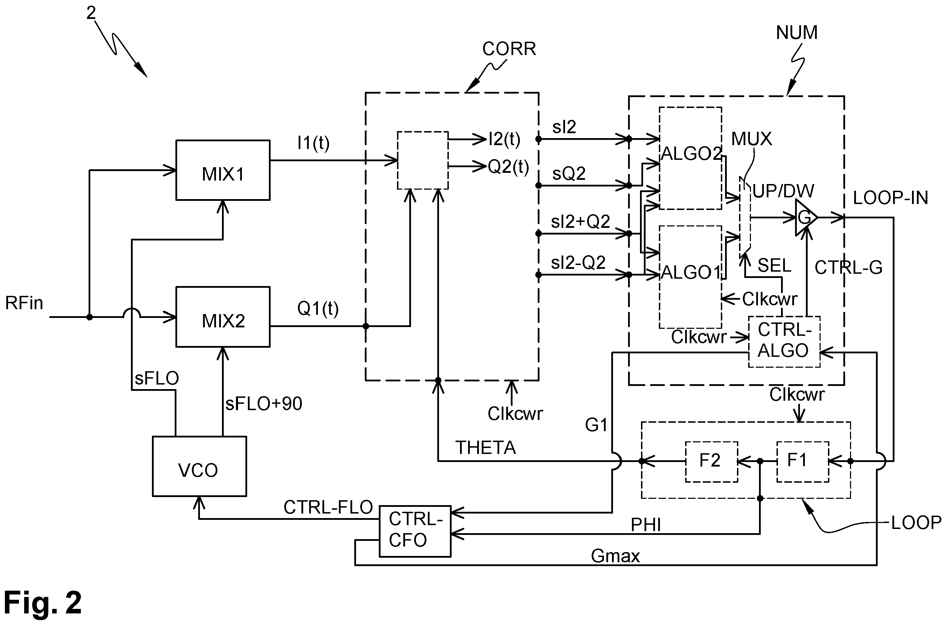

La figure 2 représente, de manière schématique et sous la forme de bloc, un mode de réalisation d'un dispositif 2 pour la compensation d'un décalage fréquentiel. Le dispositif 2 est, par exemple, mis en oeuvre dans un démodulateur QPSK d'un récepteur du type de celui décrit en relation avec la figure 1.

Le dispositif 2 comprend un circuit CORR, un circuit NUM et un circuit LOOP.

Le circuit CORR est configuré pour recevoir le signal I1(t) et le signal Q1(t). Comme cela a été indiqué précédemment, le signal I1(t) est obtenu, de manière usuelle, en multipliant un signal radiofréquence modulé en QPSK, RFin, par un cosinus à la fréquence FLO d'un oscillateur local, référencé VCO en figure 2, et en filtrant des fréquences non désirées dans le signal résultant de cette multiplication, le signal Q1(t) étant obtenu, de manière usuelle, en multipliant le signal RFin par un sinus à la fréquence FLO et en filtrant, dans le signal résultant de la multiplication, des fréquences non désirées. Pour cela, l'oscillateur VCO fournit un signal sFLO à la fréquence FLO et un signal sFLO+90 à la fréquence FLO et déphasé de 90° par rapport au signal sFLO. En figure 2, l'obtention du signal I1(t) est mise en oeuvre par un mélangeur de fréquence MIX1 recevant le signal RFin et le signal sFLO, et fournissant le signal I1(t). De manière similaire, en figure 2, l'obtention du signal Q1(t) est mise en oeuvre par un mélangeur de fréquence MIX2 recevant le signal RFin et le signal sFLO+90 et fournissant le signal Q1(t).

Le circuit CORR est en outre configuré pour recevoir un signal THETA représentatif d'un déphasage θ à appliquer aux signaux I1(t) et Q1(t). Plus particulièrement, le circuit CORR est configuré pour générer le signal I2(t) et le signal Q2(t). Par exemple, le signal I2(t) est proportionnel à I(t) .cos(phi.t-θ) - Q(t) .sin(phi.t-θ) et le signal Q2(t) est proportionnel à Q(t) .cos(phi.t-θ) + I(t) .sin(phi.t-θ) . Dit autrement, le circuit CORR est configuré pour mettre en oeuvre une rotation, ou un décalage, de phase d'une quantité θ sur les signaux I1(t) et Q1(t), de sorte à obtenir les signaux respectivement I2(t) et Q2(t). Cette fonction du circuit CORR est, de préférence, mise en oeuvre de manière entièrement analogique. Le décalage de phase θ a pour but la compensation de l'écart entre les fréquences Fc et FLO.

Le circuit CORR est en outre configuré pour fournir quatre signaux sI2, sQ2, sI2+Q2 et sI2-Q2. Ces quatre signaux sont des signaux binaires, c'est-à-dire des signaux sur un bit chacun. Le signal sI2 correspond à l'échantillonnage sur un bit du signal I2(t), le signal sQ2 correspond à l'échantillonnage sur un bit du signal Q2(t), le signal sI2+Q2 correspond à l'échantillonnage sur un bit de la somme des signaux I2(t) et Q2 (t) et le signal sI2-Q2 correspond à l'échantillonnage sur un bit de la différence entre les signaux I2(t) et Q2 (t). Dit autrement, l'état binaire du signal sI2 est représentatif du signe, ou polarité, du signal I2(t) au moment de l'échantillonnage, l'état binaire du signal sQ2 est représentatif du signe du signal Q2(t) au moment de l'échantillonnage, l'état binaire du signal sI2+Q2 est représentatif du signe de la somme des signaux I2(t) et Q2(t) au moment de l'échantillonnage.

Selon un mode de réalisation, les signaux sI2, sQ2, sI2+Q2 et sI2-Q2 correspondent à un échantillonnage mis en oeuvre à la fréquence Fcwr, qui est inférieure à la fréquence de données Fs. Le circuit CORR reçoit alors un signal d'horloge Clkcwr à la fréquence Fcwr. A titre d'exemple, la fréquence Fcwr est obtenue par division entière de la fréquence Fs. De préférence, la fréquence Fs est fournie par un circuit, non représenté en figure 2, de récupération de fréquence de données. A titre d'exemple, ce circuit de récupération de fréquence de données reçoit les signaux I2(t) et Q2(t), les échantillonne à la fréquence Fs et traite les échantillons obtenus pour asservir la fréquence Fs. Les circuits de récupération de fréquence de données sont bien connus de la personne du métier qui est en mesure de mettre en oeuvre un tel circuit dans le dispositif 2.

Le circuit NUM est configuré pour recevoir les signaux sI2, sQ2, sI2+Q2 et sI2-Q2. Le circuit NUM est en outre configuré pour générer un signal UP/DW sur un bit. Le circuit NUM est en outre configuré pour fournir un signal LOOP-IN correspondant à la multiplication du bit UP/DW par un gain G. Le signal LOOP-IN est, par exemple, un signal numérique sur plusieurs bits. De préférence, le circuit NUM est un circuit numérique.

Le circuit LOOP est configuré pour déterminer le signal THETA, donc le déphasage θ, à partir du signal LOOP-IN. Par exemple, le circuit LOOP est configuré pour recevoir le signal LOOP-IN, et a une sortie configurée pour fournir le signal THETA. De préférence, le signal THETA est un signal numérique sur plusieurs bits. De préférence, le circuit LOOP est un circuit numérique. Le circuit LOOP constitue, par exemple, un filtre numérique, de préférence un filtre de correction numérique. De préférence, le circuit LOOP est cadencé à la fréquence Fcwr et reçoit alors le signal Clkcwr.

Plus particulièrement, pendant une première phase de fonctionnement lors de laquelle les signaux I1(t) et Q1(t) sont représentatifs du symbole S1 connu de la constellation QPSK, c'est-à-dire pendant le préambule correspondant à l'émission du symbole S1, le circuit NUM est configuré pour déterminer l'état binaire du bit UP/DW à partir des signaux sI2+Q2 et sI2-Q2, de préférence uniquement à partir des signaux sI2+Q2 et sI2-Q2. Selon un mode de réalisation, le circuit NUM comprend un circuit ALGO1 configuré, pendant la première phase de fonctionnement, pour déterminer l'état du bit UP/DW à partir des signaux sI2+Q2 et sI2-Q2, de préférence uniquement à partir des signaux sI2+Q2 et sI2-Q2. De préférence, le circuit ALGO1 est une machine d'état à deux états. De préférence, le circuit ou machine d'état ALGO1 est cadencé à la fréquence Fcwr et reçoit alors le signal Clkcwr.

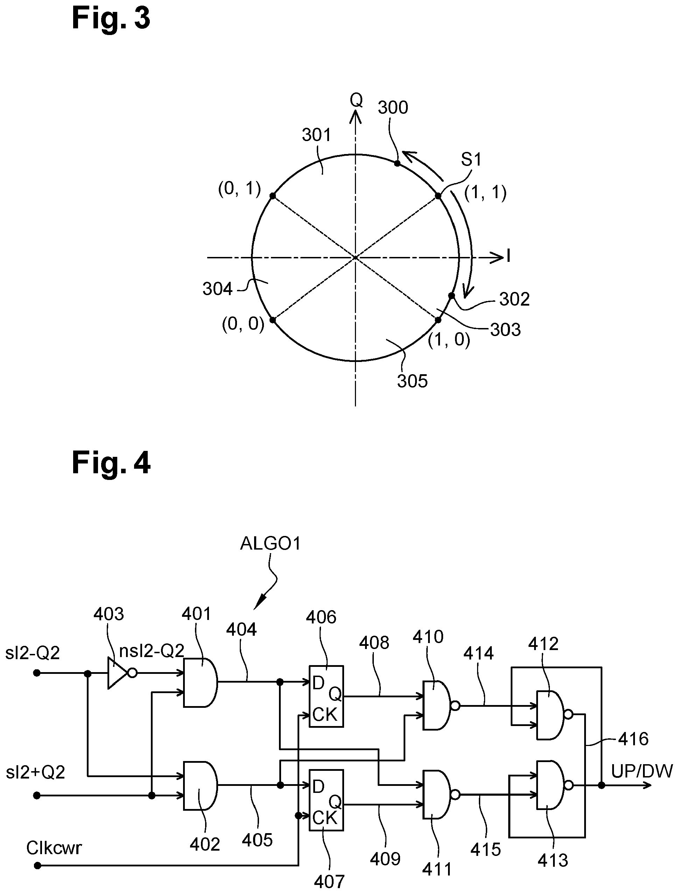

La figure 3 illustre un mode de réalisation de la détermination, pendant la première phase de fonctionnement, de l'état du bit UP/DW, à partir des signaux sI2+Q2 et sI2-Q2, par exemple mis en oeuvre par le circuit ALGO1 du circuit NUM.

Plus particulièrement, la figure 3 représente une constellation QPSK, c'est-à-dire un diagramme de constellation sur lequel sont disposés les quatre symboles d'une modulation QPSK. De manière bien connue par la personne du métier, ces quatre symboles correspondent aux quatre couples de valeurs (I(t),Q(t)) possibles, à savoir (0,0), (1,0), (0,1) et (1,1).

Dans cet exemple, on considère que le symbole S1 du préambule correspond au couple de valeurs (1,1), les signaux I1(t) et Q1(t) étant donc, lors de la réception du préambule, représentatifs de ce symbole S1 connu.

Dans ce mode de réalisation, le bit UP/DW est mis à un premier état binaire, par exemple '1' lorsque, sur la constellation QSPK, une position correspondant aux signaux Q2(t) et I2(t) est décalée dans un premier sens, par exemple le sens anti-horaire, par rapport au symbole S1, et est mis à un deuxième état binaire, par exemple '0', lorsque cette position est décalée dans un deuxième sens, par exemple le sens horaire, par rapport au symbole S1. L'expression "position correspondant aux signaux Q2(t) et I2(t)" signifie, par exemple, la position correspondant aux signaux Q2(t) et I2(t) à un instant d'échantillonnage à la fréquence Fcwr.

Selon un mode de réalisation, le sens du décalage de la position correspondant aux signaux I2(t) et Q2(t) par rapport au symbole S1 est déterminée à l'aide des seuls signaux sI2+Q2 et sI2-Q2. Cela permet d'éviter d'échantillonner sur plusieurs bits les signaux I2(t) et Q2(t) en vue de déterminer précisément la position 300, sachant, en outre, que la détermination précise de la position 300 nécessiterait alors un circuit de traitement numérique complexe, encombrant et consommateur.

Selon un exemple illustré en figure 3, à un instant d'échantillonnage à la fréquence Fcwr pour obtenir les signaux sI2, sQ2, sI2+Q2 et sI2-Q2, les signaux I2(t) et Q2(t) correspondent à une position 300 sur la constellation QPSK. Ainsi, le signal sI2+Q2 est dans un état binaire, par exemple '1', indiquant que la somme des signaux I2(t) et Q2(t) est positive, et le signal sI2-Q2 est dans un état binaire, par exemple '0', indiquant que la différence des signaux I2(t) et Q2(t) est négative. Ainsi, même sans connaître exactement l'emplacement de la position 300 par rapport au symbole S1, les signaux sI2+Q2 et sI2-Q2 permettent de savoir que la position 300 se trouve dans une zone 301 (délimitée en pointillé en figure 3), donc que la position 300 est décalée dans le sens anti-horaire par rapport au symbole S1. Dans cet exemple, le bit UP/DW est mis à son premier état binaire, par exemple '1'.

Selon un autre exemple illustré en figure 3, à un instant d'échantillonnage à la fréquence Fcwr pour obtenir les signaux sI2, sQ2, sI2+Q2 et sI2-Q2, les signaux I2(t) et Q2(t) correspondent à une position 302 sur la constellation QPSK. Ainsi, le signal sI2+Q2 est dans un état binaire, par exemple '1', indiquant que la somme des signaux I2(t) et Q2(t) est positive, et le signal sI2-Q2 est dans un état binaire, par exemple '1', indiquant que la différence des signaux I2(t) et Q2(t) est positive. Les signaux sI2+Q2 et sI2-Q2 permettent de déterminer que la position 302 se trouve dans une zone 303 (délimitée en pointillé en figure 3), donc que la position 302 est décalée dans le sens horaire par rapport au symbole S1. Dans cet exemple, le bit UP/DW est mis à son deuxième état binaire, par exemple '0'.

Le signal UP/DW permet donc de déterminer si le déphasage θ appliqué aux signaux I1(t) et Q1(t) doit être réduit ou augmenté, de manière à rapprocher la position correspondant aux signaux I2(t) et Q2(t) du symbole S1, c'est-à-dire de manière à compenser le décalage entre les fréquences Fc et FLO.

Plus généralement, les signaux sI2+Q2 et sI2-Q2 permettent de déterminer à laquelle des zones 301, 303, 304 (délimitée en pointillé en figure 3) et 305 (délimitée en pointillé en figure 3) appartient la position correspondant aux signaux I2(t) et Q2(t) au moment de l'échantillonnage ayant conduit à ces signaux sI2+Q2 et sI2-Q2, donc le sens du décalage (horaire ou antihoraire) de cette position par rapport au symbole S1, et donc l'état correspondant du bit UP/DW.

La personne du métier est en mesure de déduire, à partir des deux exemples décrits ci-dessus en relation avec la figure 3, comment déterminer l'état du bit UP/DW à partir des signaux sI2+Q2 et sI2-Q2 dans des cas où le symbole S1 est différent du couple de valeurs (1,1).

La figure 4 illustre un exemple de mise en oeuvre du circuit ALGO1.

Dans cet exemple de mode de réalisation, le circuit ALGO1 comprend deux portes ET ("AND" en anglais) 401 et 402.

La porte 401 comprend une entrée configurée pour recevoir le signal sI2+Q2 et une entrée configurée pour recevoir un signal nsI2-Q2 complémentaire du signal sI2-Q2. Le signal nsI2-Q2 est à l'état binaire '1', respectivement '0', quand le signal sI2-Q2 est à l'état binaire '0', respectivement '1'. A titre d'exemple, le signal nsI2-Q2 est disponible en sortie d'un inverseur 403 recevant le signal sI2-Q2. La porte 401 fournit un signal de sortie 404 correspondant au ET logique entre les deux signaux qu'elle reçoit.

La porte 402 comprend une entrée configurée pour recevoir le signal sI2+Q2 et une entrée configurée pour recevoir un signal sI2-Q2. La porte 402 fournit un signal de sortie 405 correspondant au ET logique entre les deux signaux qu'elle reçoit.

Les deux portes NAND 401 et 402 et l'inverseur 403 forment un premier circuit configuré pour fournir, à partir des signaux sI2+Q2 et sI2-Q2, des signaux 404 et 405 indiquant si la position correspondant aux signaux I2(t) et Q2(t) se trouve dans le quart de la constellation immédiatement décalé dans le sens horaire par rapport au symbole S1, c'est-à-dire, dans cet exemple, dans la zone 303 de la figure 3 si le signal 404 est à '0' et le signal 405 à '1', ou si la position correspondant aux signaux I2(t) et Q2(t) se trouve dans le quart de la constellation immédiatement décalé dans le sens antihoraire par rapport au symbole S1, c'est-à-dire, dans cet exemple, dans la zone 301 de la figure 3 si le signal 404 est '1' et le signal 405 à '0'.

La mise en oeuvre de ce premier circuit dans des cas où le symbole S1 est différent du couple (1,1) et/ou avec d'autres portes combinatoires que celles décrites ci-dessus est à la portée de la personne du métier.

Dans cet exemple de mode de réalisation, le circuit ALGO1 comprend deux éléments, ou portes, 406 et 407 de mémorisation synchrone. Les éléments 406 et 407 sont configurés pour être cadencés à la fréquence Fcwr et reçoivent donc chacun le signal Clkcwr sur une entrée de synchronisation CK. L'élément 406, respectivement 407, comprend une entrée de données D configurée pour recevoir le signal 404, respectivement 405. L'élément 406, respectivement 407, est configuré pour mémoriser l'état binaire de son entrée de donnée D à chaque front actif, par exemple montant, du signal Clkcwr, et pour fournir un signal 408, respectivement 409, correspondant à l'état binaire mémorisé. Le signal 408, respectivement 409 est disponible sur une sortie Q de l'élément 406, respectivement 407. De préférence, les éléments 406 et 407 sont des bascules D ("D flip-flop" en anglais).

Dans cet exemple de mode de réalisation, le circuit ALGO1 comprend en outre quatre portes NON-ET ("NAND" en anglais) 410, 411, 412 et 413.

La porte 410 comprend une entrée configurée pour recevoir le signal 408 et une entrée configurée pour recevoir le signal 405. La porte 410 fournit un signal de sortie 414 correspondant au complémentaire du ET logique entre les deux signaux qu'elle reçoit.

La porte 411 comprend une entrée configurée pour recevoir le signal 409 et une entrée configurée pour recevoir le signal 404. La porte 410 fournit un signal de sortie 415 correspondant au complémentaire du ET logique entre les deux signaux qu'elle reçoit.

Les deux portes 406 et 407 et les deux portes 410 et 411 forment un deuxième circuit fournissant des signaux 414 et 415 indiquant le résultat de la comparaison de la position correspondant aux signaux I2(t) et Q2(t) à un instant d'échantillonnage courant avec la position correspondant aux signaux I2(t) et Q2(t) à l'instant d'échantillonnage précédent. Plus particulièrement, les portes 406 et 407 fournissent sur leurs sorties Q les signaux 408 et 409 qui correspondent aux signaux 404 et 405 à l'instant d'échantillonnage précédant, donc à la position correspondant aux signaux I2(t) et Q2(t) à cet instant d'échantillonnage précédant. Les signaux 414 et 415 fournis par les portes 410 et 412 indiquent si la position correspondant aux signaux I2(t) et Q2(t) est passée ou non par le symbole S1 entre les deux instants d'échantillonnage successifs, et, si c'est le cas, dans quel sens (horaire ou antihoraire).

Dit autrement, ce deuxième circuit est configuré pour fournir, à partir des signaux de sorties du premier circuit, les signaux 414 et 415 indiquant si, entre les deux instants d'échantillonnage successifs, la position correspondant aux signaux I2(t) et Q2(t) a été décalée dans le sens horaire en passant par le symbole S1 (signal 414 à '0' et signal 415 à '1' dans cet exemple), dans le sens antihoraire en passant par le symbole S1 (signal 414 à '1' et signal 415 à '0' dans cet exemple) ou si la position correspondant aux signaux I2(t) et Q2(t) n'est pas passée par le symbole S1 entre ces deux instants d'échantillonnage (signaux 414 et 415 à '1' dans cet exemple).

La mise en oeuvre de ce deuxième circuit dans des cas où le symbole S1 est différent du couple (1,1) et/ou avec d'autres portes logiques que celles décrites ci-dessus est à la portée de la personne du métier.

La porte 412 comprend une entrée configurée pour recevoir le signal 414 et une entrée configurée pour recevoir le bit UP/DW. La porte 412 fournit un signal de sortie 416 correspondant au complémentaire du ET logique entre les deux signaux qu'elle reçoit.

La porte 413 comprend une entrée configurée pour recevoir le signal 415 et une entrée configurée pour recevoir le signal 416. La porte 413 fournit le bit UP/DW, qui correspond au complémentaire du ET logique entre les deux signaux qu'elle reçoit.

Les portes 412 et 413 forment un troisième circuit, ou point mémoire, configuré pour mettre à jour l'état du bit UP/DW à partir des signaux 414 et 415 fournis par le deuxième circuit. Par exemple, le troisième circuit met le bit UP/DW dans un premier état (dans cet exemple à '1') lorsque la position correspondant aux signaux I2(t) et Q2(t) est passée par le symbole S1, dans le sens horaire, entre les deux instants d'échantillonnage successifs (signal 414 à '0' et signal 415 à '1' dans cet exemple), dans un deuxième état (dans cet exemple à '0') lorsque la position correspondant aux signaux I2(t) et Q2(t) est passée par le symbole S1, dans le sens antihoraire, entre les deux instants d'échantillonnage successifs (signal 414 à '1' et signal 415 à '0' dans cet exemple), ou maintient l'état courant du bit UP/DW lorsque la position correspondant aux signaux I2(t) et Q2 (t) n'est pas passé par le symbole S1 entre les deux instants d'échantillonnage successifs (signaux 414 et 415 à '1' dans cet exemple).

La mise en oeuvre de ce troisième circuit dans des cas où le symbole est différent du couple (1,1) et/ou avec d'autres portes combinatoires que celles décrites ci-dessus est à la portée de la personne du métier.

Plus généralement, la personne du métier est en mesure, à partir de la description fonctionnelle faite en relation avec la figure 3, de prévoir d'autres mises en oeuvre du circuit ALGO1 que celle décrite en relation avec la figure 4.

En se référant de nouveau à la figure 2, selon un mode de réalisation, pendant la première phase de fonctionnement, c'est-à-dire lorsque les signaux I1(t) et Q1(t) sont représentatifs du symbole de préambule S1, le circuit NUM est configuré pour réduire, à partir d'une valeur maximale, le gain G de manière périodique jusqu'à ce que le gain G atteigne une valeur unitaire, par exemple en divisant le gain G de manière périodique. La fréquence à laquelle est diminué le gain G est, de préférence, plus faible que la fréquence Fcwr, par exemple 32 fois plus faible.

Cette réduction progressive du gain G permet d'augmenter la vitesse de convergence du système, ou de la boucle, comprenant les circuits CORR, NUM et LOOP, par rapport au cas où le gain G serait toujours à la valeur unitaire. En outre, cette réduction progressive du gain G permet une meilleure précision de la compensation grossière de l'écart entre les fréquences FLO et Fc par rapport au cas où le gain G serait toujours à sa valeur maximale.

Pendant la première phase de fonctionnement, c'est-à-dire la phase de réception du préambule, chaque diminution du gain G depuis sa valeur maximale jusqu'à la valeur unitaire correspond à la mise en oeuvre d'une phase de compensation grossière du décalage entre les fréquences FLO et Fc.

A titre d'exemple, le contrôle du gain G pendant la première phase de fonctionnement est mis en oeuvre par un circuit CTRL-ALGO du circuit NUM. Par exemple, le circuit CTRL-ALGO est configuré pour fournir un signal CTRL-G de commande du gain G. De préférence, le circuit CTRL-ALGO est cadencé à la fréquence Clkcwr, et reçoit donc le signal Clkcwr.

Selon un mode de réalisation, le circuit CTRL-ALGO est configuré pour détecter le début de l'émission du préambule, c'est-à-dire à partir de quel moment le signal RFin correspond à une modulation QPSK par le symbole S1 connu.

Par exemple, cette détection est mise en oeuvre sur la base des signaux sI2, sQ2, sI2-Q2 et sI2+Q2, alors que le signal UP/DW est déterminé par le circuit ALGO1 et que le gain G est à sa valeur maximale.

Plus particulièrement, lorsque le signal RFin correspond à l'émission du préambule, donc à l'émission du symbole S1 connu, les signaux sI2 et sQ2 sont chacun dans un état binaire stable pendant toute la durée du préambule. En outre, tant que le gain G est à sa valeur maximale et que l'état du bit UP/DW est déterminé par le circuit ALGO1, entre chaque deux échantillonnages successifs à la fréquence Fcwr pour obtenir les signaux sI2, sQ2, sI2-Q2 et sI2+Q2, la valeur du déphasage θ est fortement modifiée, d'où il résulte que, sur la constellation QPSK, la position correspondant aux signaux I2(t) et Q2(t) est alternativement décalée dans un premier sens et dans un deuxième sens par rapport au symbole S1. En fonction du symbole S1 de préambule, cela se traduit par une alternance de l'état binaire du signal sI2+Q2 et/ou sI2-Q2 à la fréquence Fcwr. Si cette alternance de l'état binaire du signal sI2+Q2 et/ou sI2-Q2 est observée pendant plusieurs échantillonnages successifs à la fréquence Fcwr, par exemple pendant 64 échantillonnages successifs, cela signifie que le préambule est en train d'être reçu. Par exemple, dans le cas où le symbole S1 correspond au couple I(t)='1' et Q(t)='1', c'est-à-dire au symbole (1,1), les signaux sI2 et sQ2 sont stables, par exemple à l'état binaire '1', alors que le signal sI2-Q2 est commuté à chaque période d'échantillonnage à la fréquence Fcwr.

Selon un mode de réalisation, le circuit LOOP comprend deux filtres numériques F1 et F2. Le filtre F1 est un filtre proportionnel intégrateur, le filtre F2 étant un filtre intégrateur. Le filtre F1 est configuré pour recevoir le signal LOOP-IN. Le deuxième filtre F2 est configuré pour recevoir le signal de sortie du filtre F1, et pour fournir le signal THETA. De préférence, les filtres F1 et F2 sont cadencés à la fréquence Fcwr.

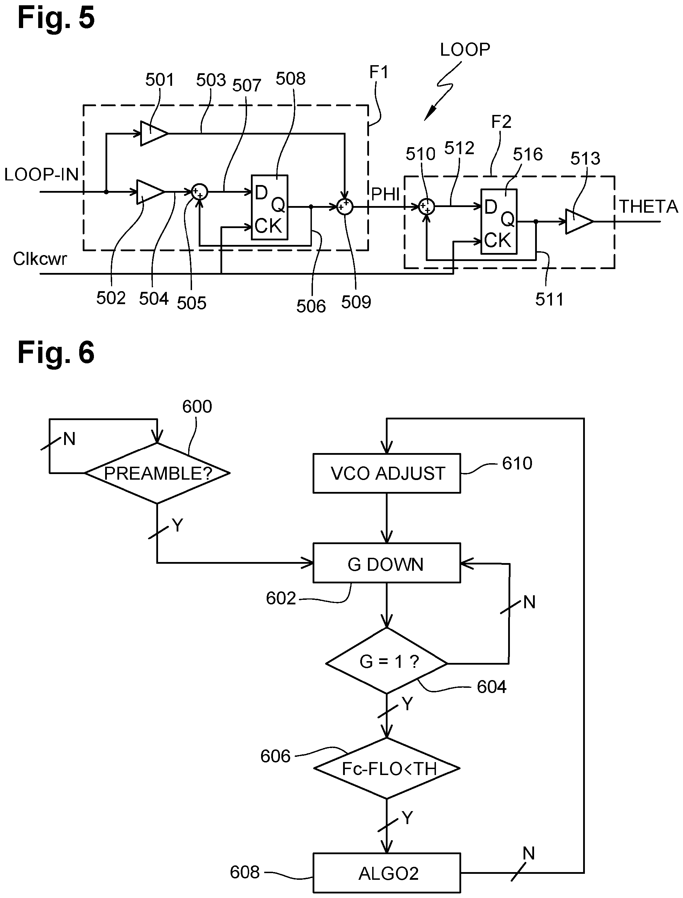

La figure 5 illustre, de manière plus détaillée, un exemple de mode de réalisation du circuit LOOP.

En figure 5, les filtres F1 et F2 sont délimités par des traits en pointillé.

Dans cet exemple de mode de réalisation, le filtre F1 comprend, par exemple, deux étages 501 et 502 de gain, recevant chacun le signal LOOP-IN et fournissant respectivement un signal 503 et un signal 504. A titre d'exemple, le gain introduit par l'étage 501 est égal à 1, le signal 503 étant alors égal à 1 fois le signal LOOP-IN. A titre d'exemple, le gain introduit par l'étage 502 est égal à 1/16, le signal 504 étant alors égal à 1/16 fois le signal LOOP-IN.

Le filtre F1 comprend un additionneur 505 configuré pour recevoir le signal 504 et un signal 506, et pour fournir un signal 507 correspondant à la somme des signaux 504 et 506.

Le signal 507 est fourni à l'entrée de donnée D d'un registre 508 du filtre F1. Le registre 508, par exemple mis en oeuvre à partir de bascules D, est configuré pour mémoriser l'état du signal numérique 506 à chaque front actif du signal Clkcwr reçu par son entrée CK, et pour fournir le signal 506 sur sa sortie Q, le signal 506 correspondant à l'état mémorisé du signal 507.

En pratique, les éléments 502, 505 et 508 forment la branche intégratrice du filtre F1, l'élément 501 formant la branche proportionnelle du filtre F1.

Le filtre F1 comprend un additionneur 509 configuré pour recevoir les signaux 503 et 506, et pour fournir un signal PHI de sortie du filtre F1. Dit autrement, l'additionneur 509 est configuré pour sommer les signaux de sortie des branches proportionnelle et intégratrice du filtre F1, et pour fournir le signal PHI de sortie du filtre F1.

Le filtre F2 est configuré pour recevoir le signal PHI de sortie du filtre F1, et pour fournir le signal THETA. Plus particulièrement, dans l'exemple de la figure 5, le filtre F2 comprend un additionneur 510 configuré pour recevoir le signal PHI et un signal 511, et pour fournir un signal 512 correspondant à la somme des signaux PHI et 511. Le filtre F2 comprend en outre un registre 516, par exemple mis en oeuvre par des bascules D. Le registre 516 est configuré pour mémoriser l'état du signal numérique 512 à chaque front actif du signal Clkcwr reçu par son entrée CK, et pour fournir le signal 511 sur sa sortie Q, le signal 511 correspondant à l'état mémorisé du signal 512. Le signal THETA est obtenu à partir du signal 511. Par exemple, le filtre F2 comprend un étage de gain 513 configuré pour recevoir le signal 511 et pour fournir le signal THETA. A titre d'exemple, le gain introduit par l'étage 513 est égal à 1/32, le signal THETA étant alors égal à 1/32 fois le signal 511.

La personne du métier est en mesure de prévoir d'autres exemple de mises en oeuvre des filtres F1 et F2, par exemple en ajoutant et/ou en supprimant des étages de gain, et/ou en modifiant les valeurs des gains indiquées ci-dessus à titre d'exemple.

En se référant de nouveau à la figure 2, et comme cela a déjà été indiqué précédemment, le dispositif 2 comprend l'oscillateur VCO configuré pour fournir les signaux sFLO et sFLO+90 à la fréquence FLO. L'oscillateur VCO est commandable, c'est-à-dire qu'il est configuré pour recevoir un signal de commande CTRL-FLO dont la valeur détermine la valeur de la fréquence FLO.

Selon un mode de réalisation, le dispositif 2 comprend un circuit CTRL-CFO configuré pour fournir le signal CTRL-FLO. Par exemple, lorsque la réception d'un préambule est détectée, et tant que le gain G n'a pas atteint la valeur unitaire une première fois, le circuit CTRL-CFO est configuré pour fournir un signal CTRL-FLO de manière que la valeur de la fréquence FLO soit égale à une valeur attendue de la fréquence Fc. Ainsi, lorsque la réception d'un préambule est détectée, et tant qu'une première phase de compensation grossière du décalage n'est pas terminée, le décalage entre les fréquences Fc et FLO n'est compensé qu'avec le décalage de phase θ appliqué par le circuit CORR.

Selon un mode de réalisation, pendant la réception du préambule, au moins à la fin de la première mise en oeuvre d'une phase de compensation grossière, de préférence à la fin de la mise en oeuvre de chaque phase de compensation grossière, le circuit CTRL-CFO est configuré pour déterminer le décalage entre la fréquence Fc et la fréquence FLO courante, pour comparer le décalage ainsi déterminé à un seuil TH, et, en fonction du résultat de cette comparaison, pour mettre à jour le signal CTRL-FLO, donc la valeur courante de la fréquence FLO. Selon un mode de réalisation, le circuit CTRL-CFO est configuré pour mettre à jour le signal CTRL-FLO à partir d'un signal de sortie du circuit LOOP, par exemple à partir du signal PHI disponible en sortie du filtre F1 à la fin de la mise en oeuvre de cette phase de compensation grossière.

Selon un mode de réalisation, pendant une phase de réception du préambule, lorsque le gain G atteint la valeur unitaire c'est-à-dire à la fin d'une phase correspondante de compensation grossière du décalage entre la fréquence Fc et la fréquence FLO courante fournie par le circuit VCO, si cet écart de fréquence est supérieur au seuil TH, par exemple de l'ordre de 10 MHz, le circuit CTRL-CFO modifie la valeur du signal CTRL-FLO, de manière à réduire l'écart entre la fréquence Fc et la fréquence FLO. Le fait de réduire l'écart entre les fréquences Fc et FLO permet que le signal THETA soit moins bruité. A titre d'exemple, le signal CTRL-FLO est modifié à partir du signal PHI moyenné sur plusieurs cycles du signal Clkcwr, par exemple sur 16 ou 32 cycles du signal Clkcwr. Par exemple, le signal CTRL-FLO est modifié de manière à recevoir cette valeur moyennée du signal PHI.

La vérification, à la fin de la mise en oeuvre d'une phase de compensation grossière, que le décalage entre la fréquence Fc et la fréquence FLO courante fournie par le circuit VCO est inférieur ou supérieur au seuil TH est mise en oeuvre, par exemple, par le circuit CTRL-CFO. Par exemple, cette vérification est effectuée en vérifiant qu'un signal de sortie du circuit LOOP représentatif du décalage entre les fréquences FLO et Fc, par exemple le signal PHI, est respectivement inférieur ou supérieur à un seuil déterminé par le seuil TH. Le circuit CTRL-CFO reçoit alors, par exemple, le signal PHI et un signal binaire G1 dont l'état binaire indique si le gain G a atteint ou non la valeur unitaire pendant une phase de réception du préambule. A titre d'exemple, le signal G1 est fourni par le circuit CTRL-ALGO.

En outre, pendant la phase de réception du préambule, lorsque la valeur de la fréquence FLO est modifiée à la fin de la mise en oeuvre d'une phase de compensation grossière, une nouvelle phase de compensation grossière est mise en oeuvre de manière à tenir compte de la nouvelle valeur courante de la fréquence FLO. Pendant cette nouvelle phase de compensation grossière, le gain G est diminué périodiquement de sa valeur maximale jusqu'à la valeur unitaire. A titre d'exemple, la mise en oeuvre d'une nouvelle phase de compensation grossière est commandée par une réinitialisation du gain G à sa valeur maximale. Par exemple, la réinitialisation du gain G à sa valeur maximale est commandée par le circuit CTRL-CFO, par exemple par un signal binaire Gmax, par exemple par une commutation du signal Gmax d'un premier état binaire à un deuxième état binaire.

Selon un mode de réalisation, à l'inverse, pendant une phase de réception du préambule, lorsque le gain G atteint la valeur unitaire à la fin d'une phase de compensation grossière du décalage entre les fréquences Fc et FLO, si ce décalage est inférieur au seuil TH, le signal CTRL-FLO est maintenu à sa valeur courante et le gain G est ensuite maintenu à sa valeur unitaire. Dit autrement, la valeur courante de la fréquence FLO n'est pas modifiée, et il n'y a pas de nouvelle mise en oeuvre d'une phase de compensation grossière. Par exemple, le maintien du gain G à sa valeur unitaire est commandé par le circuit CTRL-CFO. A titre d'exemple, ce maintien du gain G à sa valeur unitaire est commandé par le signal binaire Gmax fournit par le circuit CTRL-CFO au circuit CTRL-G, par exemple en maintenant le signal binaire Gmax à son premier état binaire.

La figure 6 est un organigramme illustrant le fonctionnement du dispositif 2 selon un mode de réalisation.

A une étape 600 (bloc "Preamble?"), le dispositif 2, par exemple son circuit CTRL-ALGO, vérifie s'il est en train de recevoir un préambule correspondant au symbole S1. A titre d'exemple, et comme cela a été décrit précédemment en relation avec la figure 2, cette vérification est mise en oeuvre alors que le signal UP/DW est déterminé par le circuit ALGO1 et que le gain G est à sa valeur maximale, en observant sur plusieurs cycles du signal Clkcwr si les signaux sI2 et SQ2 correspondent au symbole S1, et si le signal sI2+Q2 et/ou le signal sI2-Q2 commutent à chaque cycle du signal Clkcwr.

Si la réception du préambule est détectée (sortie Y du bloc 600), une première mise en oeuvre de la phase de correction grossière a commencé, et le procédé se poursuit à une étape 602 (bloc "G DOWN"). Sinon (sortie N du bloc 600), le dispositif 2 reste à l'étape 600.

A l'étape 602, le dispositif 2, par exemple son circuit CTRL-ALGO, commande une diminution du gain G, puis attend un nombre donné de cycles du signal Clkcwr. Ce nombre donné de cycles correspond à la période de diminution périodique du gain G pendant la phase de correction grossière où le signal UP/DW est déterminé par le circuit ALGO1. Le procédé se poursuit à une étape 604 (bloc "G=1?").

A l'étape 604, le dispositif 2, par exemple son circuit CTRL-ALGO, vérifie si le gain G a atteint la valeur unitaire, donc si une phase de correction grossière correspondante est terminée. Si c'est le cas (sortie Y du bloc 604), le procédé se poursuit à une étape 606 (bloc "Fc-FLO < TH"), sinon (sortie N du bloc 604) le procédé se poursuit à l'étape 602 de diminution du gain G.

A l'étape 606, le dispositif 2, par exemple son circuit CTRL-CFO, vérifie, au moment où le gain G atteint la valeur unitaire pendant la réception du préambule, c'est-à-dire à la fin de la phase de correction grossière correspondante, si l'écart entre la fréquence Fc et la fréquence FLO courante est inférieur au seuil TH. A titre d'exemple, cette vérification est mise en oeuvre de la manière décrite précédemment en relation avec la figure 2, par comparaison à un seuil d'un signal de sortie du circuit LOOP, par exemple en comparant le signal PHI à ce seuil.

Si cet écart entre les fréquences Fc et FLO est inférieur au seuil TH (sortie Y du bloc 606), la valeur courante de la fréquence FLO n'est pas mise à jour, le gain G est maintenu à sa valeur unitaire, et il n'y a pas de mise en oeuvre d'une nouvelle phase de correction grossière. Le procédé se poursuit alors à une étape 608 (bloc "ALGO2").

En revanche, si cet écart entre la fréquence Fc et la fréquence FLO courante est supérieur au seuil TH (sortie N du bloc 606), le procédé se poursuit à une étape 610 (bloc "VCO ADJUST") .

A l'étape 610, la valeur du signal CTRL-FLO est mise à jour à partir du signal PHI. En outre, le gain G est réinitialisé à sa valeur maximale, par exemple au moyen du signal Gmax. La réinitialisation du gain G à sa valeur maximale entraîne la mise en oeuvre d'une nouvelle phase de correction grossière. Après une temporisation correspondant à la période à laquelle le gain G est diminué, le procédé se poursuit à l'étape 602.

Selon un mode de réalisation, à partir de l'étape 608, le gain G est maintenu à sa valeur unitaire, par exemple par le signal Gmax, et, en outre, le signal UP/DW est déterminé par un circuit ALGO2 du circuit NUM, et non plus par le circuit ALGO1 (voir figure 2). En outre, le signal CTRL-FLO est maintenu à sa valeur courante, ou, dit autrement, la fréquence FLO est maintenue à sa valeur courante.

En se référant de nouveau à la figure 2, comme cela vient d'être indiqué ci-dessus, selon un mode de réalisation, le circuit NUM comprend en outre un circuit ALGO2.

Selon un mode de réalisation, le circuit ALGO2 est configuré, au moins pendant une phase de réception de données via le signal RFin, pour déterminer le déphasage θ de manière à compenser plus finement, et de manière continue, l'écart entre la fréquence Fc et la fréquence FLO courante. Dit autrement, le circuit ALGO2 est configuré pour déterminer l'état du signal UP/DW lorsque la mise en oeuvre de la ou des phases de compensation grossière est terminée.

Selon un mode de réalisation, pendant une deuxième phase de fonctionnement, débutant à l'étape 608 (figure 6), le circuit NUM, et plus particulièrement son circuit ALGO2, sont configurés pour déterminer l'état du signal UP/DW non seulement à partir des signaux sI2-Q2 et sI2+Q2, mais également en fonction des signaux sI2 et sQ2. En effet, pendant cette deuxième phase de fonctionnement, une fois l'émission du préambule terminée, le signal RFin est modulé en QPSK sur la base d'un symbole mis à jour à la fréquence Fs, et non plus sur la base d'un unique symbole constant S1 préalablement connu du dispositif 2. Pendant cette deuxième phase de fonctionnement, le circuit NUM est configuré pour estimer auquel des symboles (0,0), (1,0), (0,1) et (1,1) de la constellation QPSK correspondent les signaux I1(t) et Q1(t) à partir des signaux sI2 et sQ2. Dit autrement, le circuit NUM est configuré pour déterminer, lors du dernier échantillonnage à la fréquence Fcwr mis en oeuvre par le circuit CORR, à quel symbole de la constellation QPSK correspondent les signaux I1(t) et Q1(t). Dit encore autrement, le circuit NUM est configuré pour déterminer, lors du dernier échantillonnage à la fréquence Fcwr mis en oeuvre par le circuit CORR, à quel symbole de la constellation QPSK correspondent les signaux I2(t) et Q2(t).

En outre, selon un mode de réalisation, pour déterminer l'état du signal UP/DW pendant la deuxième phase de fonctionnement, le circuit NUM, et plus exactement son circuit ALGO2,est configuré pour mettre le bit UP/DW à son premier état binaire lorsque, sur la constellation QPSK, une position correspondant aux signaux Q2(t) et I2(t) est décalée dans un premier sens, par exemple le sens anti-horaire, par rapport au symbole estimé à partir des signaux sQ2(t) et sI2(t), et à son deuxième état binaire lorsque, sur la constellation QPSK, une position correspondant aux signaux Q2(t) et I2(t) est décalée dans un deuxième sens, par exemple le sens horaire, par rapport au symbole estimé à partir des signaux sQ2(t) et sI2(t). Il est ici entendu que la position correspondant aux signaux I2(t) et Q2(t) est prise au moment de l'échantillonnage à la fréquence Fcwr.

Selon un mode de réalisation, de manière similaire à ce que le circuit ALGO1 met en oeuvre, le sens du décalage, sur la constellation QPSK, de la position correspondant aux signaux I2(t) et Q2(t) par rapport au symbole estimé à partir des signaux sI2 et sQ2, est déterminé à partir des signaux sI2+Q2 et sI2-Q2. Il est ici entendu que les signaux sI2 et sQ2 à partir desquels est estimé le symbole QPSK, et les signaux sI2+Q2 et sI2-Q2 à partir desquels est estimé le sens du décalage par rapport au symbole estimé correspondent à un même instant d'échantillonnage à la fréquence Fcwr. De préférence, le circuit ALGO2 est un circuit purement combinatoire.

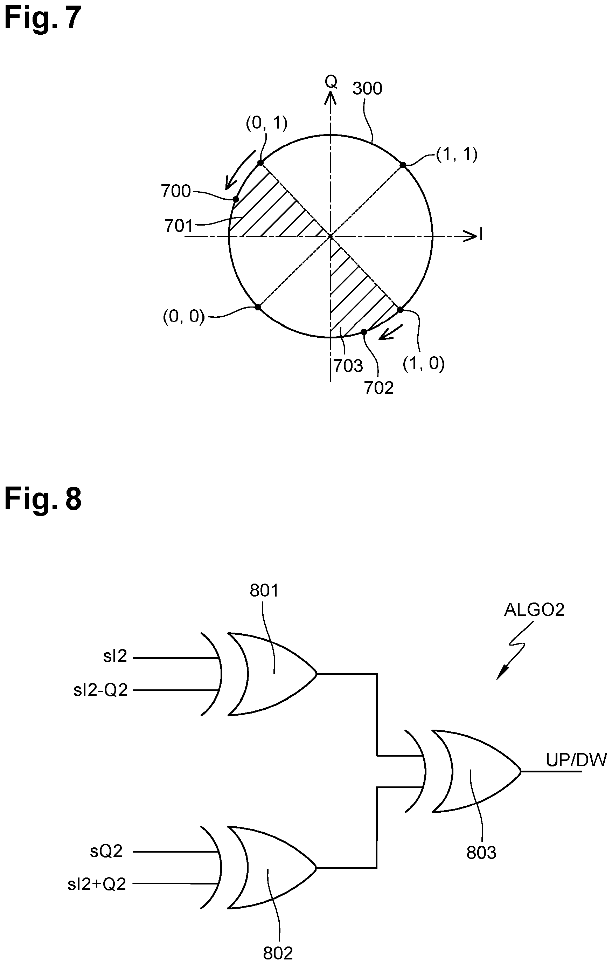

La figure 7 illustre un mode de réalisation de la détermination, pendant la deuxième phase de fonctionnement, de l'état du bit UP/DW, à partir des signaux sI2+Q2 et sI2-Q2, cette détermination du bit UP/DW étant par exemple mise en oeuvre par le circuit ALGO2 du circuit NUM.

Selon un exemple illustré en figure 7, au moment de l'échantillonnage pour obtenir les signaux sI2, sQ2, sI2+Q2 et sI2-Q2, les signaux I2(t) et Q2(t) correspondent à une position 700 sur la constellation QPSK. Les signaux sI2 et sQ2 obtenus lors de cet échantillonnage sont à des états binaires, par exemple respectivement '0' et '1', qui permettent d'estimer que le symbole reçu lors de l'échantillonnage est le symbole (0,1). En outre, le signal sI2+Q2 obtenu lors de cet échantillonnage est dans un état binaire, par exemple '0', indiquant que la somme des signaux I2(t) et Q2(t) est négative, et le signal sI2-Q2 est dans un état binaire, par exemple '0', indiquant que la différence des signaux I2(t) et Q2(t) est négative. Ainsi, même sans connaître exactement l'emplacement de la position 700 par rapport au symbole (0,1), les signaux sI2+Q2 et sI2-Q2 permettent de savoir que la position 700 se trouve dans une zone 701 (hachurée en figure 7), donc que la position 700 est décalée dans le sens anti-horaire par rapport au symbole (0,1). Dans cet exemple, le bit UP/DW est mis à son premier état binaire, par exemple '1'.

Selon un autre exemple illustré en figure 7, au moment de l'échantillonnage, les signaux I2(t) et Q2(t) correspondent à une position 702 sur la constellation QPSK. Les signaux sI2 et sQ2 obtenus lors de cet échantillonnage sont à des états binaires, par exemple respectivement '1' et '0', qui permettent d'estimer que le symbole reçu lors de l'échantillonnage est le symbole (1,0). En outre, le signal sI2+Q2 obtenu lors de cet échantillonnage est dans un état binaire, par exemple '0', indiquant que la somme des signaux I2(t) et Q2(t) est négative, et le signal sI2-Q2 est dans un état binaire, par exemple '1', indiquant que la différence des signaux I2(t) et Q2(t) est positive. Ainsi, même sans connaître exactement l'emplacement de la position 702 par rapport au symbole (1,0), les signaux sI2+Q2 et sI2-Q2 permettent de savoir que la position 702 se trouve dans une zone 703 (hachurée en figure 7), donc que la position 702 est décalée dans le sens horaire par rapport au symbole (1,0). Dans cet exemple, le bit UP/DW est mis à son deuxième état binaire, par exemple '0'.

Le signal UP/DW permet, comme dans l'algorithme décrit en relation avec la figure 3, de déterminer si le déphasage θ appliqué aux signaux I1(t) et Q1(t) doit être réduit, ou augmenté, de manière à compenser le décalage entre les fréquences Fc et FLO. Du fait que le gain G est maintenu à sa valeur unitaire pendant la deuxième phase de fonctionnement, la compensation du décalage entre les fréquences FLO et Fc est alors plus précise que pendant la ou les phases de compensation grossière mises en oeuvre pendant la première phase de fonctionnement.

La personne du métier est en mesure de déterminer, à partir des deux exemples décrits ci-dessus en relation avec la figure 7, pour chacun des symboles de la constellation QPSK, quelle combinaison des signaux sI2 et sQ2 correspond à quel symbole estimé, et, en outre, une fois qu'un symbole a été estimé, quelle combinaison des signaux sI2+Q2 et sI2-Q2 permet de déterminer que le sens de décalage est le sens horaire, ou le sens antihoraire.

La figure 8 représente un exemple de mode de réalisation du circuit ALGO2 mettant en oeuvre l'algorithme décrit en relation avec la figure 7.

Dans l'exemple de la figure 8, le signal sI2+Q2 est à l'état binaire '1', respectivement '0', si la somme des signaux I2(t) et Q2(t) est positive, respectivement négative, le signal sI2-Q2 est à l'état binaire '1', respectivement '0', si la différence des signaux I2(t) et Q2(t) est positive, respectivement négative, le signal sI2 est à l'état binaire '1', respectivement '0', si le signal I2(t) est positif, respectivement négatif, le signal sQ2 est à l'état binaire '1', respectivement '0', si le signal Q2(t) est positif, respectivement négatif, et le bit UP/DW est mis à l'état binaire '1', respectivement '0', lorsque le décalage est dans le sens anti-horaire, respectivement dans le sens horaire.

Dans cet exemple, le circuit ALGO2 comprend trois portes OU-EXCLUSIF ("XOR" en anglais) 801, 802 et 803.

La porte 801 est configurée pour recevoir les deux signaux sI2 et sI2-Q2, la porte 802 étant configurée pour recevoir les signaux sQ2 et sI2+Q2. La porte 803 est configurée pour recevoir le signal de sortie de la porte 801 et le signal de sortie de la porte 802, et pour fournir le bit UP/DW.

La personne du métier est en mesure, à partir de la description fonctionnelle faite ci-dessus du circuit ALGO2, de prévoir d'autres implémentations de ce circuit ALGO2.

En se référant de nouveau à la figure 2, le dispositif 2, par exemple son circuit NUM, comprend un circuit configuré pour détecter le passage de la première phase de fonctionnement, lorsque le signal UP/DW est déterminé par le circuit ALGO1 et que le gain G décroit périodiquement de sa valeur maximale à la valeur unitaire, à la deuxième phase de fonctionnement, lorsque le signal UP/DW est déterminé par le circuit ALGO2 et que le gain G est maintenu à la valeur unitaire. Ce circuit est par exemple configuré pour déterminer le passage de la première phase de fonctionnement à la deuxième phase de fonctionnement sur la base des signaux G1 et Gmax. Par exemple, lorsqu'une commutation du signal G1 indique que le gain G vient d'atteindre la valeur unitaire, et que, en réponse à cette commutation du signal G1, le signal Gmax ne commute pas, ou, dit autrement, commande le maintien du gain G à la valeur unitaire, cela signifie que la première phase de fonctionnement est terminée, et que la deuxième phase de fonctionnement débute.

A titre d'exemple, le circuit de détection du passage de la première phase de fonctionnement à la deuxième phase de fonctionnement est le circuit CTRL-ALGO, déjà configuré pour commander les diminutions périodiques du gain G jusqu'à sa valeur unitaire.

Par ailleurs, selon un mode de réalisation illustré par la figure 2, les deux circuits ALGO1 et ALGO2 fonctionnent en parallèle, le signal UP/DW fourni à l'étage de gain G étant le signal de sortie du circuit ALGO1 pendant la première phase de fonctionnement, et le signal de sortie du circuit ALGO2 pendant la deuxième phase de fonctionnement. Le circuit NUM comprend alors un circuit de sélection ("Multiplexer" en anglais) MUX configuré pour recevoir le bit de sortie du circuit ALGO1, le bit de sortie du circuit ALGO2 et un signal de commande SEL, et pour fournir le bit UP/DW sur sa sortie. Plus particulièrement, le circuit MUX est configuré pour que le bit UP/DW corresponde au bit de sortie du circuit ALGO1 lorsque le signal SEL est dans un premier état binaire, et au bit de sortie du circuit ALGO2 lorsque le signal SEL est dans un deuxième état binaire. Le signal SEL est fourni par le circuit configuré pour détecter le passage de la première phase de fonctionnement à la deuxième phase de fonctionnement, c'est-à-dire par le circuit CTRL-ALGO dans l'exemple de la figure 2.

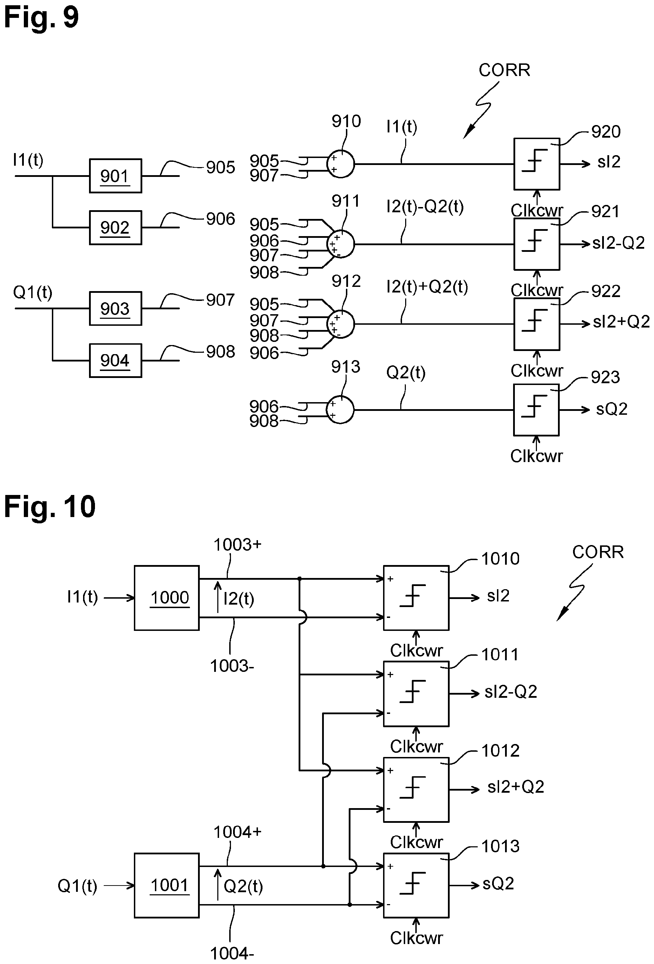

La figure 9 illustre un mode de réalisation du circuit CORR du dispositif 2.

Dans le mode de réalisation de la figure 9, les signaux I1(t) et Q1(t) sont des signaux référencés par rapport à la masse, ou, dit autrement, ne sont pas des signaux différentiels.

Le circuit CORR comprend quatre circuits 901, 902, 903 et 904. Le circuit 901 est configuré pour recevoir le signal I1(t) et le multiplier par un cosinus d'argument égal au déphasage θ, c'est-à-dire par cos(θ), et pour fournir un signal 905 correspondant au résultat de cette multiplication. Le circuit 902 est configuré pour recevoir le signal I1(t) et le multiplier par un sinus d'argument égal au déphasage θ, c'est-à-dire par sin(θ), et pour fournir un signal 906 correspondant au résultat de cette multiplication. Le circuit 903 est configuré pour recevoir le signal Q1(t) et le multiplier par un sinus d'argument θ, et pour fournir un signal 907 correspondant au résultat de cette multiplication. Le circuit 904 est configuré pour recevoir le signal Q1(t) et le multiplier par un cosinus d'argument θ, et pour fournir un signal 908 correspondant au résultat de cette multiplication.

Le circuit CORR comprend en outre quatre circuits 910, 911, 912 et 913. Le circuit 910 est configuré pour recevoir les signaux 905 et 907, et pour fournir le signal I2(t) correspondant à la somme des signaux 905 et 907. Le circuit 911 est configuré pour recevoir les signaux 905, 906, 907 et 908, et pour fournir un signal I2(t)-Q2(t) correspondant à la somme des signaux 905, 906 et 907 à laquelle est retranchée le signal 908. Le circuit 912 est configuré pour recevoir les signaux 905, 906, 907 et 908, et pour fournir le signal I2(t)+Q2(t) correspondant à la somme des signaux 905, 907 et 908 à laquelle est retranchée le signal 906. Le circuit 913 est configuré pour recevoir les signaux 906 et 908, et pour fournir le signal Q2(t) correspondant au signal 908 auquel est retranché le signal 906. En pratique, le signal I2(t)-Q2 (t) correspond au signal I2(t) auquel est retranché le signal Q2(t), le signal I2(t)+Q2(t) correspondant à la somme des signaux I2(t) et Q2(t). Pour ne pas surcharger la figure les connexions entre les sorties des circuits 901 à 904 et les entrées des circuits 910 à 913 n'ont pas été tracées en figure 9.

Le circuit CORR comprend en outre quatre circuits 920, 921, 922 et 923. Le circuit 920 est configuré pour recevoir le signal I2(t) et le signal Clkcwr, et pour fournir le signal sI2, le circuit 921 est configuré pour recevoir le signal I2(t)-Q2(t) et le signal Clkcwr, et pour fournir le signal sI2-Q2. Le circuit 922 est configuré pour recevoir le signal I2(t)+Q2(t) et le signal Clkcwr, et pour fournir le signal sI2+Q2. Le circuit 923 est configuré pour recevoir le signal Q2(t) et le signal Clkcwr, et pour fournir le signal sQ2.

A titre d'exemple, chaque circuit 920, 921, 922 et 923 est configuré, à chaque front actif du signal Clkcrw, pour fournir un bit de sortie à un premier état binaire, par exemple '1', lorsque le signal I2(t), Q2(t), I2(t)-Q2(t) ou I2(t)+Q2(t) qu'il reçoit est positif au moment du front actif du signal Clkcwr, pour fournir un bit de sortie à un deuxième état binaire, par exemple '0', lorsque ce signal est négatif au moment du front actif du signal Clkcwr, et pour maintenir l'état de son bit de sortie entre chaque deux fronts actifs successifs du signal Clkcwr. Dit autrement, chaque circuit 920, 921, 922 et 923 met en oeuvre un échantillonnage, ou quantification, sur un bit du signal respectivement I2(t), I2(t)-Q2(t), I2(t)+Q2(t) ou Q2(t) qu'il reçoit.

Un avantage du circuit CORR de la figure 9 est que chaque chemin entre une entrée configurée pour recevoir le signal I1(t) ou Q1(t) et une sortie configurée pour fournir l'un des signaux sI2, sQ2, sI2+Q2 et sI2-Q2 traverse le même nombre de circuits, d'où il résulte que le circuit CORR n'introduit pas de déphasage entre les signaux sI2, sQ2, sI2+Q2 et sI2-Q2.

La mise en oeuvre des circuits 901 à 904, 910 à 913 et 920 à 924 n'a pas été détaillée et est à la portée de la personne du métier à partir de la description fonctionnelle faite ci-dessus en relation avec la figure 9.

La figure 10 illustre un autre mode de réalisation du circuit CORR du dispositif 2. Dans ce mode de réalisation, les signaux I2(t) et Q2(t) générés à l'intérieur du circuit CORR sont des signaux différentiels propagés chacun sur un ensemble d'une ligne dite non inverseuse et d'une ligne dite inverseuse, le signal I2(t), respectivement Q2(t), correspondant alors à la tension prise entre les deux lignes et référencée à la ligne inverseuse.

Plus particulièrement, en figure 10, le circuit CORR comprend un circuit 1000 et un circuit 1001. Le circuit 1000 est configuré pour recevoir le signal I1(t), ce signal I1(t) pouvant être un signal différentiel, et pour fournir le signal différentiel I2(t) entre une ligne non inverseuse 1003+ et une ligne inverseuse 1003-. Le circuit 1001 est configuré pour recevoir le signal Q1(t), ce signal Q1(t) pouvant être un signal différentiel, et pour fournir le signal différentiel Q2(t) entre une ligne non inverseuse 1004+ et une ligne inverseuse 1004-. De préférence, les circuits 1000 et 1001 sont configurés pour avoir un mode commun de sortie identique. La mise en oeuvre des circuits 1000 et 1001 est à la portée de la personne du métier.

Le circuit CORR comprend en outre quatre circuits 1010, 1011, 1012 et 1013. Chaque circuit 1010, 1011, 1012 et 1013 est configuré pour recevoir le signal Clkcwr. Le circuit 1010 est en outre configuré pour recevoir les lignes 1003+ et 1003-sur des entrées respectivement non-inverseuse (+) et inverseuse (-), et pour fournir le signal sI2. Le circuit 1011 est en outre configuré pour recevoir les lignes 1003+ et 1004+ sur des entrées respectivement non-inverseuse (+) et inverseuse (-), et pour fournir le signal sI2-Q2. Le circuit 1012 est en outre configuré pour recevoir les lignes 1003+ et 1004- sur des entrées respectivement non-inverseuse (+) et inverseuse (-), et pour fournir le signal sI2+Q2. Le circuit 1013 est en outre configuré pour recevoir les lignes 1004+ et 1004- sur des entrées respectivement non-inverseuse (+) et inverseuse (-), et pour fournir le signal sQ2. Dit autrement, chaque circuit 1010, 1011, 1012 et 1013 met en oeuvre un échantillonnage, ou quantification, sur un bit du signal respectivement I2(t), I2(t)-Q2(t), I2(t)+Q2(t) ou Q2(t) qu'il reçoit.

La mise en oeuvre des circuits 1010, 1011, 1012 et 1013 est à la portée de la personne du métier.

A titre d'exemple, chaque circuit 1010, 1011, 1012 et 1013 est configuré, à chaque front actif du signal Clkcrw, pour fournir un bit de sortie à un premier état binaire, par exemple '1', lorsque la tension différentielle entre ses entrées non-inverseuse (+) et inverseuse (-) est positive au moment du front actif du signal Clkcwr, pour fournir un bit de sortie à un deuxième état binaire, par exemple '0', lorsque la tension différentielle entre ses entrées non-inverseuse et inverseuse est négative au moment du front actif du signal Clkcwr, et pour maintenir l'état de son bit de sortie entre deux fronts actifs successifs du signal Clkcwr.

Selon une variante de réalisation, non illustrée, des circuits CORR des figures 9 et 10, les circuits 920 et 923, respectivement 1010 et 1013, ne reçoivent pas le signal Clkcwr, mais un signal à la fréquence de donnée Fs multiple entière de la fréquence Clkcwr. Dans ce cas, on considère quand même que les circuits 920 et 923, respectivement 1010 et 1013, échantillonnent les signaux I2(t) et Q2(t) à la fréquence Fcwr du signal Clkcwr. Dans une telle variante, de préférence, les circuits 920 et 923, respectivement 1010 et 1013, sont partagés entre le circuit CORR et le circuit de récupération de la fréquence de données Fs.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, une fois que la première phase de fonctionnement pendant laquelle le signal UP/DW est déterminée par le circuit ALGO1 est terminée, la deuxième phase de fonctionnement peut être mise en oeuvre différemment de ce qui a été décrit ci-dessus.

En outre, dans les modes de réalisation décrits ci-dessus, pendant la première phase de fonctionnement, à chaque fin d'une phase de compensation grossière, l'écart entre la fréquence Fc et la fréquence FLO courante est déterminé puis comparé au seuil TH, et, si cet écart déterminé est supérieur au seuil TH, la valeur de la fréquence FLO est modifiée et une nouvelle phase de correction grossière est mise en oeuvre en réinitialisant le gain G à sa valeur maximale. Dans des variantes de réalisation non illustrées, cette comparaison n'est pas mise en oeuvre, et la première phase de fonctionnement comprend au moins une mise en oeuvre de l'étape 610, le nombre de mises en oeuvre de l'étape 610 étant constant. Dit autrement, dans ces variantes, le nombre de mises en oeuvre de la phase de compensation grossière est constant et au moins égal à deux, et à chaque mise en oeuvre d'une phase de compensation grossière à l'exception de la dernière, la fréquence FLO est mise à jour. La première phase de fonctionnement se termine et la deuxième phase de fonctionnement débute à la fin de la dernière mise en oeuvre de la phase de compensation grossière.

Par ailleurs, bien que cela n'ait pas été décrit précédemment, la durée de l'émission du préambule par l'émetteur Tx peut être fixe et choisie suffisamment longue pour assurer que, à la fin du préambule, le décalage entre les fréquences Fc et FLO a été suffisamment compensé. Alternativement, la durée d'émission peut être variable et la fin de l'émission du préambule peut être demandée par le récepteur Rx à l'émetteur Tx, une fois que le récepteur Rx a suffisamment compensé le décalage entre les fréquences Fc et FLO.

Enfin, la mise en oeuvre pratique des modes de réalisation et variantes décrits est à la portée de la personne du métier à partir des indications fonctionnelles données ci-dessus.

## Revendications

1. Dispositif (2) comprenant un premier circuit (CORR), un deuxième circuit (NUM) et un troisième circuit (LOOP), dans lequel :
le premier circuit (CORR) est configuré pour :
- recevoir un premier signal (I1(t)), un deuxième signal (Q1(t)) et un troisième signal (THETA), le troisième signal étant représentatif d'un déphasage ;
- générer un quatrième signal (I2(t)) et un cinquième signal (Q2(t)) par application dudit déphasage respectivement au premier signal et au deuxième signal ; et
- fournir un sixième signal (sI2) correspondant à un échantillonnage sur un bit du quatrième signal (I2), un septième signal (sQ2) correspondant à un échantillonnage sur un bit du cinquième signal (Q2), un huitième signal (sI2-Q2) correspondant à un échantillonnage sur un bit de la différence entre les quatrième et cinquième signaux, et un neuvième signal (sI2+Q2) correspondant à un échantillonnage sur un bit de la somme entre les quatrième et cinquième signaux,
le deuxième circuit (NUM) est configuré pour :
- recevoir les sixième, septième, huitième et neuvième signaux ;
- déterminer, lors d'une première phase où les premier et deuxième signaux sont représentatifs d'un premier symbole (S1) connu d'une constellation QPSK, un état d'un premier bit (UP/DW) parmi un premier état et un deuxième état à partir des huitième et neuvième signaux (sI2-Q2, sI2+Q2) ;
- fournir un signal numérique (LOOP-IN) correspondant à une multiplication du premier bit (UP/DW) par un gain (G) ; et
- diminuer périodiquement, pendant ladite première phase, ledit gain (G) jusqu'à une valeur unitaire, et
le troisième circuit (LOOP) est configuré pour déterminer le troisième signal (THETA) à partir dudit signal numérique (LOOP-IN) .

2. Dispositif selon la revendication 1, dans lequel le deuxième circuit (NUM) comprend un quatrième circuit (ALGO1) configuré pour, lors de la première phase :
- mettre le premier bit (UP/DW) au premier état lorsque, sur la constellation QPSK, une position correspondant aux quatrième (I2(t)) et cinquième (Q2(t)) signaux est décalée dans un premier sens par rapport au premier symbole (S1), et
- mettre le premier bit (UP/DW) au deuxième état lorsque, sur la constellation QPSK, la position est décalée dans un deuxième sens par rapport au premier symbole.

3. Dispositif selon la revendication 2, dans lequel le quatrième circuit (ALGO1) est configuré pour déterminer le sens du décalage à partir des huitième (sI2-Q2) et neuvième (sI2+Q2) signaux, de préférence uniquement à partir des huitième et neuvième signaux.

4. Dispositif selon la revendication 3, dans lequel le quatrième circuit (ALGO1) est une machine d'états à deux états, configurée pour être cadencée à la fréquence d'échantillonnage de la somme et de la différence des quatrième (I2(t)) et cinquième (Q2(t)) signaux.

5. Dispositif selon l'une quelconque des revendications 1 à 4, dans lequel le troisième circuit (LOOP) comprend un premier filtre numérique (F1), de préférence proportionnel intégrateur, suivi d'un deuxième filtre numérique (F2), de préférence intégrateur, le premier filtre étant configuré pour recevoir ledit signal numérique (IN-LOOP), le deuxième filtre étant configuré pour recevoir un signal de sortie (PHI) du premier filtre et pour fournir le troisième signal (THETA).

6. Dispositif selon la revendication 5, dans lequel les premier et deuxième filtres (F1, F2) sont configurés pour être cadencés à la fréquence d'échantillonnage de la somme et de la différence des quatrième (I2(t) et cinquième (Q2(t)) signaux.

7. Dispositif selon l'une quelconque des revendication 1 à 6, comprenant en outre un oscillateur (VCO) configuré pour fournir un dixième signal (sFLO) et un onzième signal (sFLO+90) à une première fréquence déterminée par un signal de commande (CTRL-FLO), le onzième signal (sFLO+90) étant déphasé de 90° par rapport au dixième signal (sFLO), et un circuit de commande (CTRL-CFO) configuré pour fournir ledit signal de commande (CTRL-FLO).

8. Dispositif selon la revendication 7, dans lequel, lors de la première phase de fonctionnement, le circuit de commande (CTRL-CFO) est configuré, au moins lorsque le gain (G) atteint une première fois la valeur unitaire, pour :
- déterminer un écart entre la première fréquence et une deuxième fréquence, de préférence à partir d'un signal (PHI) fourni par le troisième circuit (LOOP) ;
- comparer (606) l'écart déterminé à un seuil ;
- mettre à jour le signal de commande (CTRL-FLO) et commander une réinitialisation du gain (G) à une valeur maximale lorsque ladite comparaison indique que l'écart est supérieur audit seuil ; et
- maintenir le signal de commande (CTRL-FLO) à sa valeur courante et commander le maintien du gain (G) à la valeur unitaire lorsque ladite comparaison indique que l'écart est inférieur audit seuil.

9. Dispositif selon la revendication 7 ou 8, comprenant en outre un premier mélangeur de fréquence (MIX1) configuré pour recevoir le dixième signal (sFLO) et un signal radiofréquence modulé en QPSK (RFin) et un deuxième mélangeur de fréquence (MIX2) configuré pour recevoir le onzième signal (sFLO+90) et le signal radiofréquence modulé en QPSK (RFin), le premier mélangeur (MIX1) étant configuré pour fournir le premier signal (I1(t)) et le deuxième mélangeur (MIX2) étant configuré pour fournir le deuxième signal (Q1(t)).

10. Dispositif selon la revendication 9, dans lequel le premier circuit (CORR) est configuré pour échantillonner les quatrième et cinquième signaux, la somme des quatrième et cinquième signaux et la différence des quatrième et cinquième signaux à une fréquence inférieure à une fréquence de données du signal radiofréquence modulé en QPSK (RFin).

11. Dispositif selon l'une quelconque des revendications 1 à 10, dans lequel, lors d'une deuxième phase de fonctionnement, le deuxième circuit (NUM) est configuré pour déterminer l'état du premier bit (UP/DW) sur la base des sixième, septième, huitième et neuvième signaux (sI2, sQ2, SI2+Q2, sI2-Q2).

12. Dispositif selon la revendication 11, dans lequel le deuxième circuit (NUM) comprend un circuit (CTRL-ALGO) configuré pour déterminer un passage de la première phase de fonctionnement à la deuxième phase de fonctionnement.

13. Dispositif selon la revendication 11 ou 12, dans lequel le deuxième circuit (NUM) comprend un cinquième circuit (ALGO2) configuré pour, lors de la deuxième phase :
- estimer auquel des quatre symboles (S1, S2, S3, S4) de la constellation correspondent les premier et deuxième signaux (I1(t), Q1(t)) à partir des sixième et septième signaux (sI2, sQ2) ;
- mettre le premier bit (UP/DW) au premier état lorsque, sur la constellation, une position correspondant aux quatrième (I2(t)) et cinquième (Q2(t)) signaux est décalée dans un premier sens par rapport au symbole estimé, et
- mettre le premier bit (UP/DW) au deuxième état lorsque, sur la constellation, ladite position est décalée dans un deuxième sens par rapport au symbole estimé.

14. Dispositif selon la revendication 13, dans lequel le cinquième circuit (ALGO2) est configuré pour déterminer le sens du décalage à partir des huitième (sI2+Q2) et neuvième (sI2-Q2) signaux.

15. Démodulateur QPSK comprenant un dispositif selon l'une quelconque des revendications 1 à 14.

## Patentansprüche

1. Vorrichtung (2), die eine erste Schaltung (CORR), eine zweite Schaltung (NUM) und eine dritte Schaltung (LOOP) aufweist, wobei:
die erste Schaltung (CORR) eingerichtet ist, zum:
- Empfangen eines ersten Signals (I1(t)), eines zweiten Signals (Q1(t)) und eines dritten Signals (THETA), wobei das dritte Signal für eine Phasenverschiebung repräsentativ ist;
- Erzeugen eines vierten Signals (12(t)) und eines fünften Signals (Q2(t)) durch Anwendung der Phasenverschiebung jeweils auf das erste Signal bzw. das zweite Signal; und
- Ausgeben eines sechsten Signals (sI2), das einer Abtastung über ein Bit des vierten Signals (I2) entspricht, eines siebten Signals (sQ2), das einer Abtastung über ein Bit des fünften Signals (Q2) entspricht, eines achten Signals (sI2-Q2), das einer Abtastung über ein Bit der Differenz zwischen dem vierten und fünften Signal entspricht, und eines neunten Signals (sI2+Q2), das einer Abtastung über ein Bit der Summe zwischen dem vierten und fünften Signal entspricht, wobei die zweite Schaltung (NUM) ist eingerichtet, zum:
- Empfangen des sechsten, siebten, achten und neunten Signals;
- Bestimmen, während einer ersten Phase, in der das erste und das zweite Signal für ein erstes bekanntes Symbol (S1) einer QPSK-Konstellation repräsentativ sind, und zwar eines Zustands eines ersten Bits (UP/DW) aus einem ersten Zustand und einem zweiten Zustand basierend auf dem achten und dem neunten Signal (sI2-Q2, sI2+Q2);
- Abgeben eines digitalen Signals (LOOP-IN), das einer Multiplikation des ersten Bits (UP/DW) mit einer Verstärkung (G) entspricht; und
- periodisch Verringern, während der ersten Phase, der Verstärkung (G) bis auf einen Einheitswert, und
wobei die dritte Schaltung (LOOP) eingerichtet ist, um das dritte Signal (THETA) basierend auf dem digitalen Signal (LOOP-IN) zu bestimmen.

2. Vorrichtung nach Anspruch 1, wobei die zweite Schaltung (NUM) eine vierte Schaltung (ALGO1) aufweist, die während der ersten Phase eingerichtet ist zum:
- Setzen des ersten Bits (UP/DW) auf den ersten Zustand, wenn in der QPSK-Konstellation eine Position, die dem vierten (12(t)) und fünften (Q2(t)) Signal entspricht, in einer ersten Richtung in Bezug auf das erste Symbol (S1) verschoben ist, und
- Setzen des ersten Bits (UP/DW) auf den zweiten Zustand, wenn bei der QPSK-Konstellation die Position in einer zweiten Richtung in Bezug auf das erste Symbol verschoben ist.

3. Vorrichtung nach Anspruch 2, wobei die vierte Schaltung (ALGO1) eingerichtet ist, die Richtung der Verschiebung basierend auf dem achten (sI2-Q2) und neunten (sI2+Q2) Signal, vorzugsweise nur basierend auf dem achten und neunten Signal, zu bestimmen.

4. Vorrichtung nach Anspruch 3, wobei die vierte Schaltung (ALGO1) eine Zwei-Zustands-Maschine ist, die eingerichtet ist, auf die Frequenz der Abtastung der Summe und der Differenz des vierten (12(t)) und fünften (Q2(t)) Signals ausgelegt zu sein.

5. Vorrichtung nach einem der Ansprüche 1 bis 4, wobei die dritte Schaltung (LOOP) ein erstes digitales Filter (F1), vorzugsweise proportional-integral, aufweist, gefolgt von einem zweiten digitalen Filter (F2), vorzugsweise integrierend, wobei das erste Filter eingerichtet ist, das digitale Signal (IN-LOOP) zu empfangen, und das zweite Filter eingerichtet ist, ein Ausgangssignal (PHI) des ersten Filters zu empfangen und das dritte Signal (THETA) zu liefern.

6. Vorrichtung nach Anspruch 5, wobei das erste und das zweite Filter (F1, F2) eingerichtet sind, auf die Frequenz der Abtastung der Summe und der Differenz des vierten (12(t)) und des fünften (Q2(t)) Signals ausgelegt zu sein.

7. Vorrichtung nach einem der Ansprüche 1 bis 6, die ferner einen Oszillator (VCO) aufweist, der eingerichtet ist, ein zehntes Signal (sFLO) und ein elftes Signal (sFLO+90) mit einer ersten Frequenz zu liefern, die durch ein Steuersignal (CTRL-FLO) bestimmt wird, wobei das elfte Signal (sFLO+90) in Bezug auf das zehnte Signal (sFLO) um 90° phasenverschoben ist, und eine Steuerschaltung (CTRL-CFO) aufweist, die eingerichtet ist, das Steuersignal (CTRL-FLO) zu liefern.

8. Vorrichtung nach Anspruch 7, wobei während der ersten Betriebsphase die Steuerschaltung (CTRL-CFO) eingerichtet ist, zumindest dann, wenn die Verstärkung (G) ein erstes Mal den Einheitswert erreicht, zum:
- Bestimmen einer Differenz zwischen der ersten Frequenz und einer zweiten Frequenz, vorzugsweise basierend auf einem von der dritten Schaltung (LOOP) gelieferten Signal (PHI);
- Vergleichen (606) der ermittelten Differenz mit einem Schwellenwert;
- Aktualisieren des Steuersignals (CTRL-FLO) und Steuern eines Rücksetzens der Verstärkung (G) auf einen Maximalwert, wenn der Vergleich anzeigt, dass die Differenz größer als der Schwellenwert ist; und
- Halten des Steuersignals (CTRL-FLO) auf seinem aktuellen Wert und Steuern des Haltens der Verstärkung (G) auf dem Einheitswert, wenn der Vergleich anzeigt, dass die Differenz kleiner als der Schwellenwert ist.

9. Vorrichtung nach Anspruch 7 oder 8, ferner aufweisend einen ersten Frequenzmischer (MIX1), der eingerichtet ist, das zehnte Signal (sFLO) und ein QPSK-moduliertes Funkfrequenzsignal (RFin) zu empfangen, und aufweisend einen zweiten Frequenzmischer (MIX2), der eingerichtet ist, das elfte Signal (sFLO+90) und das QPSK-modulierte Funkfrequenzsignal (RFin) zu empfangen, wobei der erste Mischer (MIX1) eingerichtet ist, das erste Signal (I1(t)) zu liefern, und der zweite Mischer (MIX2) eingerichtet ist, das zweite Signal (Q1(t)) zu liefern.

10. Vorrichtung nach Anspruch 9, wobei die erste Schaltung (CORR) eingerichtet ist, das vierte und das fünfte Signal, die Summe des vierten und des fünften Signals und die Differenz des vierten und des fünften Signals mit einer Frequenz abzutasten, die kleiner ist als eine Datenfrequenz des QPSKmodulierten Funkfrequenzsignals (RFin).

11. Vorrichtung nach einem der Ansprüche 1 bis 10, wobei während einer zweiten Betriebsphase die zweite Schaltung (NUM) eingerichtet ist, den Zustand des ersten Bits (UP/DW) basierend auf den sechsten, siebten, achten und neunten Signalen (sI2, sQ2, sI2+Q2, sI2-Q2) zu bestimmen.

12. Vorrichtung nach Anspruch 11, wobei die zweite Schaltung (NUM) eine Schaltung (CTRL-ALGO) aufweist, die eingerichtet ist, einen Übergang von der ersten Betriebsphase zur zweiten Betriebsphase zu bestimmen.

13. Vorrichtung nach Anspruch 11 oder 12, wobei die zweite Schaltung (NUM) eine fünfte Schaltung (ALGO2) aufweist, die eingerichtet ist, während der zweiten Phase, zum:
- Abschätzen, welchem der vier Symbole (S1, S2, S3, S4) in der Konstellation das erste und zweite Signal (I1(t), Q1(t)) entsprechen, basierend auf dem sechsten und siebten Signal (sI2, sQ2);
- Setzen des ersten Bits (UP/DW) auf den ersten Zustand, wenn in der Konstellation eine Position, die dem vierten (12(t)) und fünften (Q2(t)) Signal entspricht, in einer ersten Richtung in Bezug auf das geschätzte Symbol verschoben ist, und
- Setzen des ersten Bits (UP/DW) auf den zweiten Zustand, wenn in der Konstellation die Position in einer zweiten Richtung in Bezug auf das geschätzte Symbol verschoben ist.

14. Vorrichtung nach Anspruch 13, wobei die fünfte Schaltung (ALGO2) eingerichtet ist, die Richtung der Verschiebung basierend auf dem achten (sI2+Q2) und neunten (sI2-Q2) Signal zu bestimmen.

15. QPSK-Demodulator, der eine Vorrichtung nach einem der Ansprüche 1 bis 14 aufweist.

## Claims

1. Device (2) comprising a first circuit (CORR), a second circuit (NUM), and a third circuit (LOOP), wherein:
the first circuit (CORR) is configured to:
- receive a first signal (I1(t)), a second signal (Q1(t)), and a third signal (THETA), the third signal being representative of a phase shift;
- generate a fourth signal (I2(t)) and a fifth signal (Q2(t)) by application of said phase shift respectively to the first signal and to the second signal; and
- deliver a sixth signal (sI2) corresponding to a sampling over one bit of the fourth signal (I2), a seventh signal (sQ2) corresponding to a sampling over one bit of the fifth signal (Q2), an eighth signal (sI2-Q2) corresponding to a sampling over one bit of the difference between the fourth and fifth signals, and a ninth signal (sI2+Q2) corresponding to a sampling over one bit of the sum between the fourth and fifth signals, the second circuit (NUM) is configured to:
- receive the sixth, seventh, eighth, and ninth signals;
- determine, during a first phase where the first and second signals are representative of a first known symbol (S1) of a QPSK constellation, a state of a first bit (UP/DW) from among a first state and a second state based on the eighth and ninth signals (sI2-Q2, sI2+Q2);
- deliver a digital signal (LOOP-IN) corresponding to a multiplication of the first bit (UP/DW) by a gain (G); and
- periodically decrease, during said first phase, said gain (G) down to a unit value, and
the third circuit (LOOP) is configured to determine the third signal (THETA) based on said digital signal (LOOP-IN) .

2. Device according to claim 1, wherein the second circuit (NUM) comprises a fourth circuit (ALGO1) configured to, during the first phase:
- set the first bit (UP/DW) to the first state when, on the QPSK constellation, a position corresponding to the fourth (I2(t)) and fifth (Q2 (t)) signals is shifted in a first direction with respect to the first symbol (S1), and
- set the first bit (UP/DW) to the second state when, on the QPSK constellation, the position is shifted in a second direction with respect to the first symbol.

3. Device according to claim 2, wherein the fourth circuit (ALGO1) is configured to determine the direction of the shift based on the eighth (sI2-Q2) and ninth (sI2+Q2) signals, preferably based on the eighth and ninth signals only.

4. Device according to claim 3, wherein the fourth circuit (ALGO1) is a two-state state machine, configured to be rated at the frequency of the sampling of the sum and of the difference of the fourth (I2(t)) and fifth (Q2(t)) signals.

5. Device according to any of claims 1 to 4, wherein the third circuit (LOOP) comprises a first digital filter (F1), preferably proportional-integral, followed by a second digital filter (F2), preferably integrating, the first filter being configured to receive said digital signal (IN-LOOP), the second filter being configured to receive an output signal (PHI) of the first filter and to deliver the third signal (THETA).

6. Device according to claim 5, wherein the first and second filters (F1, F2) are configured to be rated at the frequency of the sampling of the sum and of the difference of the fourth (I2(t)) and fifth (Q2(t)) signals.

7. Device according to any of claims 1 to 6, further comprising an oscillator (VCO) configured to deliver a tenth signal (sFLO) and an eleventh signal (sFLO+90) at a first frequency determined by a control signal (CTRL-FLO), the eleventh signal (sFLO+90) being phase-shifted by 90° with respect to the tenth signal (sFLO), and a control circuit (CTRL-CFO) configured to deliver said control signal (CTRL-FLO).

8. Device according to claim 7, wherein, during the first operating phase, the control circuit (CTRL-CFO) is configured, at least when the gain (G) reaches for a first time the unit value, to:
- determine a difference between the first frequency and a second frequency, preferably based on a signal (PHI) delivered by the third circuit (LOOP);
- compare (606) the determined difference with a threshold;
- update the control signal (CTRL-FLO) and control a resetting of the gain (G) to a maximum value when said comparison indicates that the difference is greater than said threshold; and
- hold the control signal (CTRL-FLO) at its current value and control the holding of the gain (G) at the unit value when said comparison indicates that the difference is smaller than said threshold.

9. Device according to claim 7 or 8, further comprising a first frequency mixer (MIX1) configured to receive the tenth signal (sFLO) and a QPSK-modulated radio frequency signal (RFin) and a second frequency mixer (MIX2) configured to receive the eleventh signal (sFLO+90) and the QPSK-modulated radio frequency signal (RFin), the first mixer (MIX1) being configured to deliver the first signal (I1(t)) and the second mixer (MIX2) being configured to deliver the second signal (Q1(t)).

10. Device according to claim 9, wherein the first circuit (CORR) is configured to sample the fourth and fifth signals, the sum of the fourth and fifth signals, and the difference of the fourth and fifth signals at a frequency smaller than a data frequency of the QPSK-modulated radio frequency signal (RFin).

11. Device according to any of claims 1 to 10, wherein, during a second operating phase, the second circuit (NUM) is configured to determine the state of the first bit (UP/DW) based on the six, seventh, eighth, and ninth signals (sI2, sQ2, SI2+Q2, sI2-Q2).

12. Device according to claim 11, wherein the second circuit (NUM) comprises a circuit (CTRL-ALGO) configured to determine a passage from the first operating phase to the second operating phase.

13. Device according to claim 11 or 12, wherein the second circuit (NUM) comprises a fifth circuit (ALGO2) configured to, during the second phase:
- estimate which of the four symbols (S1, S2, S3, S4) in the constellation the first and second signals (I1(t), Q1(t)) correspond to, based on the sixth and seventh signals (sI2, sQ2);
- set the first bit (UP/DW) to the first state when, on the constellation, a position corresponding to the fourth (I2(t)) and fifth (Q2 (t)) signals is shifted in a first direction with respect to the estimated symbol, and
- set the first bit (UP/DW) to the second state when, on the constellation, said position is shifted in a second direction with respect to the estimated symbol.

14. Device according to claim 13, wherein the fifth circuit (ALGO2) is configured to determine the shifting direction based on the eighth (sI2+Q2) and ninth (sI2-Q2) signals.

15. QPSK demodulator comprising a device according to any of claims 1 to 14.
